# EUROPEAN PATENT APPLICATION

(11) **EP 4 510 695 A1**
(43) Date of publication of application: **19.02.2025**
(21) Application number: 23799127.8
(22) Date of filing: 14.03.2023
(51) Int. Cl.: H04W 28/08

(54) **COMMUNICATION METHOD AND COMMUNICATION APPARATUS**

(30) Priority: 06.05.2022 CN 202210486422; 29.09.2022 CN 202211202765
(71) Applicant: Huawei Technologies Co., Ltd., Shenzhen, Guangdong 518129 (CN)
(72) Inventor: FENG, Zhao, Shenzhen, Guangdong 518129 (CN); XIN, Yang, Shenzhen, Guangdong 518129 (CN); WU, Yizhuang, Shenzhen, Guangdong 518129 (CN); WANG, Yuan, Shenzhen, Guangdong 518129 (CN)
(74) Representative: Goddar, Heinz J.
(86) International application number: PCT/CN2023/081213
(87) International publication number: WO 2023/213139

(57) **Abstract**

This application provides a communication method and a communication apparatus. The method includes: A policy control function network element receives information about a first time window and information about a first parameter, where the first time window is a time window that is of data transfer of a first service and that is configured by an application function network element, the first parameter includes a parameter of the data transfer of the first service in the first time window, and the first parameter includes at least one of a delay, a packet error rate, a packet loss rate, a bit rate, and a guaranteed bit rate. The policy control function network element sends information about M policies of the first service, where information about each policy includes information about N time windows, M and N are positive integers, the information about each policy is determined based on the information about the first time window and the information about the first parameter, and the N time windows included in one of the M policies of the first service are used to send or receive data of the first service. In this application, a time window that better meets a data transfer requirement of a service can be efficiently selected.

## Description

This application claims priorities to Chinese Patent Application No. 202210486422.9, filed with the China National Intellectual Property Administration on May 6, 2022 and entitled "COMMUNICATION METHOD AND COMMUNICATION APPARATUS", and to Chinese Patent Application No. 202211202765.4, filed with the China National Intellectual Property Administration on September 29, 2022 and entitled "COMMUNICATION METHOD AND COMMUNICATION APPARATUS", both of which are incorporated herein by reference in their entireties.

### TECHNICAL FIELD

This application relates to the communication field, and more specifically, to a communication method and a communication apparatus in the communication field.

### BACKGROUND

An artificial intelligence (artificial intelligence, AI) or machine learning (machine learning, ML) technology is widely used in many application fields of various industries due to advantages of high accuracy and high degree of automation. To smoothly complete transfer of an AI/ML model or data between a terminal device and an application function (application function, AF), the AF and a 5G network system (5th generation system, 5GS) need to negotiate on transfer time of an AI/ML service in advance. However, there is still no solution in the industry to efficiently negotiate on proper transfer time of the AI/ML service between the AF and the 5GS.

### SUMMARY

Embodiments of this application provide a communication method and a communications apparatus, to efficiently negotiate on proper transfer time of an AI/ML service.

According to a first aspect, a communication method is provided. The method includes: A policy control function network element receives information about a first time window and information about a first parameter, where the first time window is a time window that is of data transfer of a first service and that is configured by an application function network element, the first parameter includes a parameter of the data transfer of the first service in the first time window, and the first parameter includes at least one of a delay (packet delay budget, PDB), a packet error rate (packet error rate, PER), a packet loss rate (packet loss rate, PLR), a bit rate (bit rate), and a guaranteed bit rate (guaranteed bit rate, GBR); and the policy control function network element sends information about M policies of the first service, where information about each policy includes information about N time windows, the information about each policy is determined based on the information about the first time window and the information about the first parameter, the N time windows included in one of the M policies of the first service are used to send or receive data of the first service, and both M and N are positive integers.

Specifically, the information about the first time window and the information about the first parameter may be carried in a first request message.

It should be noted that all types of information sent or received in the following may be carried in a request message or a response message. A specific message name is not limited in this application.

Specifically, the foregoing time window may indicate a length of the time window, or may indicate a location of the time window, or may indicate a length and a location of the time window. This is not limited in this application.

Specifically, the foregoing first service may be an AI/ML service, or may be another service. This is not limited in this application.

In the foregoing method, more parameter restrictions are added, so that a time window that better meets a requirement of data transfer of a service can be selected, and a case in which the application function network element negotiates on a time window with a network for a plurality of times because a time window selected by the application function network element does not meet the requirement of the data transfer of the service is prevented.

With reference to the first aspect, in some implementations of the first aspect, the method further includes: The policy function network element sends information about N second parameters, where the information about the N time windows is in a one-to-one correspondence with the information about the N second parameters, each second parameter includes a parameter of data transfer of the first service in a corresponding time window, and the second parameter includes at least one of a delay, a packet error rate, a packet loss rate, a bit rate, and a guaranteed bit rate.

Specifically, the information about the N second parameters may be carried in a first response message.

In the foregoing method, each time window included in each policy is corresponding to a specific parameter of data transfer of a service in the time window, so that a more appropriate time window of the data transfer of the service is selected with reference to a specific value of the parameter.

With reference to the first aspect, in some implementations of the first aspect, the method further includes: The policy control function network element receives first indication information, where the first indication information indicates whether the information about each policy is allowed to include information about a plurality of time windows.

If the first indication information does not indicate that the information about each policy may include information about a plurality of time windows, the policy control function network element may not combine a plurality of time windows in a policy. If the first indication information indicates that the information about each policy may include information about a plurality of time windows, the policy control function network element may combine a plurality of time windows in a policy.

Specifically, the first indication information may be sent together with the information about the first time window and the information about the first parameter, or may be sent before the information about the first time window and the information about the first parameter. This is not limited in this application.

When the first indication message indicates that the information about each policy may include information about a plurality of time windows, each of the M policies that can be selected by the application function network element may include a plurality of scattered time windows. When the network cannot find a consecutive time window that can meet the requirement of the data transfer of the service of the application function network element, data transfer of the service may alternatively be completed by using a plurality of scattered time windows, to prevent interruption of the data transfer of the service.

With reference to the first aspect, in some implementations of the first aspect, when information about one policy includes the information about the plurality of time windows, a time interval between any two adjacent time windows in the plurality of time windows is less than or equal to a first threshold.

Specifically, the first threshold may be received by the policy control function network element from another network element, or may be configured by the policy function network element. This is not limited in this application.

In addition, a value of the first threshold may be set based on an actual requirement of the service, and the like. A specific value of the first threshold is not limited in this application.

If the time interval between the plurality of scattered time windows is excessively large, service experience may be affected. Alternatively, if the time interval between the plurality of scattered time windows is excessively small, difficulty in finding the plurality of scattered time windows by the network is increased. Therefore, the time interval of the plurality of scattered time windows may be flexibly set based on the requirement of the service.

With reference to the first aspect, in some implementations of the first aspect, the method further includes: The policy control function network element receives a network performance analytics result, where the network performance analytics result includes information about K time windows and information about K fourth parameters, the information about the K time windows is in a one-to-one correspondence with the information about the K fourth parameters, K is a positive integer greater than or equal to N, each fourth parameter includes a parameter of data transfer of the first service in a corresponding time window, and the fourth parameter includes at least one of a delay, a packet error rate, a packet loss rate, a bit rate, and a guaranteed bit rate.

According to the foregoing method, specific information about a parameter of data transfer corresponding to each time window of a network data analytics function network element may be obtained, to better assist the policy control function network element in selecting some policies that can be used for the data transfer of the service.

With reference to the first aspect, in some implementations of the first aspect, the method further includes: The policy control function network element sends information about a third parameter, where the information about the third parameter includes a value range of the first parameter.

For example, values of the first parameter in the information about the first parameter are respectively: PDB = 20 ms, PER = 0.01%, PLR = 0.03%, and bit rate = 500 Mbps. In this case, the application function network element converts values of the parameters into value ranges of the parameters, and the value ranges of the parameters are respectively: PDB < 20 ms, PER < 0.01%, PLR < 0.03%, and bit rate > 500 Mbps.

It should be understood that the network data analytics function network element sends, to the policy control function network element based on the foregoing value ranges of the parameters forwarded by the policy control function network element, information about a policy that meets the requirement of the data transfer of the service.

By sending the value ranges of the parameters to the network data analytics function network element, the network data analytics function network element may send, to the policy control function network element, the information about the policy that meets the requirement of the data transfer of the service, so that signaling overheads can be reduced, and operation complexity of the policy control function network element can be reduced.

With reference to the first aspect, in some implementations of the first aspect, the method further includes: The policy control function network element determines the information about the M policies of the first service based on the information about the first time window, the information about the first parameter, and the network performance analytics result.

Alternatively, the policy control function network element may determine the information about the M policies of the first service based on the information about the first time window, the information about the third parameter, and the network performance analytics result.

Optionally, a unified data storage function network element may also send an existing policy to the policy control function network element. The policy control function network element may determine the information about the M policies based on the information about the first time window, the first indication information, the information about the first parameter or the information about the third parameter, the analytics result of the network data function network element, and information about the existing policy, and send the information about the M policies to the application function network element.

According to a second aspect, a communication method is provided. The method includes: An application function network element sends information about a first time window and information about a first parameter, where the first time window is a time window that is of data transfer of a first service and that is configured by the application function network element, the first parameter includes a parameter of the data transfer of the first service in the first time window, and the first parameter includes at least one of a delay, a packet error rate, a packet loss rate, a bit rate, and a guaranteed bit rate; the application function network element receives information about M policies of the first service, where information about each policy includes information about N time windows, and the information about each policy is determined based on the information about the first time window and the information about the first parameter; and the application function network element sends or receives data of the first service in the N time windows included in one of the M policies, where both M and N are positive integers.

Specifically, the foregoing time window may indicate a length of the time window, or may indicate a location of the time window, or may indicate a length and a location of the time window. This is not limited in this application.

Specifically, the foregoing first service may be an AI/ML service, or may be another service. This is not limited in this application.

In the foregoing method, more parameter restrictions are added, so that a time window that better meets a requirement of data transfer of a service can be selected, and a case in which the application function network element negotiates on a time window with a network for a plurality of times because a time window selected by the application function network element does not meet the requirement of the data transfer of the service is prevented.

With reference to the second aspect, in some implementations of the second aspect, the method further includes: The application function network element receives information about N second parameters, where the information about the N time windows is in a one-to-one correspondence with the information about the N second parameters, each second parameter includes a parameter of data transfer of the first service in a corresponding time window, and the second parameter includes at least one of a delay, a packet error rate, a packet loss rate, a bit rate, and a guaranteed bit rate.

In the foregoing method, each time window included in each policy is corresponding to a specific parameter of data transfer of a service in the time window, so that a more appropriate time window of the data transfer of the service is selected with reference to a specific value of the parameter.

With reference to the second aspect, in some implementations of the second aspect, the method further includes: The application function network element sends first indication information, where the first indication information indicates whether the information about each policy is allowed to include information about a plurality of time windows.

If the first indication information does not indicate that the information about each policy may include information about a plurality of time windows, a plurality of combined time windows may not exist in each policy received by the application function network element. If the first indication information indicates that the information about each policy may include information about a plurality of time windows, a plurality of combined time windows may exist in each policy received by the application function network element.

Specifically, the first indication information may be sent together with the information about the first time window and the information about the first parameter, or may be sent before the information about the first time window and the information about the first parameter are sent. This is not limited in this application.

When the first indication message indicates that the information about each policy may include information about a plurality of time windows, each of the M policies that can be selected by the application function network element may include a plurality of scattered time windows. When the network cannot find a consecutive time window that can meet the requirement of the data transfer of the service of the application function network element, data transfer of the service may alternatively be completed by using a plurality of scattered time windows, to prevent interruption of the data transfer of the service.

With reference to the second aspect, in some implementations of the second aspect, when information about one policy includes the information about the plurality of time windows, a time interval between any two adjacent time windows in the plurality of time windows is less than or equal to a first threshold.

Specifically, the first threshold may be configured by the application function network element based on an actual requirement of the service, and the like. A specific value of the first threshold is not limited in this application.

If the time interval between the plurality of scattered time windows is excessively large, service experience may be affected. Alternatively, if the time interval between the plurality of scattered time windows is excessively small, difficulty in finding the plurality of scattered time windows by the network is increased. Therefore, the time interval of the plurality of scattered time windows may be flexibly set based on the requirement of the service.

According to a third aspect, a communication method is provided. The method includes: A network data analytics function network element receives information about a third parameter, where the information about the third parameter includes a value range of a first parameter, the first parameter includes a parameter of data transfer of a first service in a first time window, the first time window is a time window that is of the data transfer of the first service and that is configured by an application function network element, and the first parameter includes at least one of a delay budget, a packet error rate, a packet loss rate, a bit rate, and a guaranteed bit rate; the network data analytics function network element performs network analytics and determines a network performance analytics result based on the information about the third parameter; and the network data analytics function network element sends the network performance analytics result, where the network performance analytics result includes information about K time windows and information about K fourth parameters, the information about the K time windows is in a one-to-one correspondence with the information about the K fourth parameters, each fourth parameter includes a parameter of data transfer of the first service in a corresponding time window, and the fourth parameter includes at least one of a delay, a packet error rate, a packet loss rate, a bit rate, and a guaranteed bit rate.

Specifically, the foregoing time window may indicate a length of the time window, or may indicate a location of the time window, or may indicate a length and a location of the time window. This is not limited in this application.

Specifically, the foregoing first service may be an AI/ML service, or may be another service. This is not limited in this application.

It should be understood that a value of the first parameter that is in the information about the first parameter and received by the network data analytics function network element is converted into the value range of the first parameter in the information about the third parameter.

For example, value ranges of parameters in the information about the third parameter are respectively: PDB < 20 ms, PER < 0.01%, PLR < 0.03%, and bit rate > 500 Mbps.

It should be understood that the network data analytics function network element sends, to the policy control function network element based on the foregoing value ranges of the parameters sent by the policy control function network element, information about a policy that meets the requirement of the data transfer of the service.

The network data analytics function network element can send, to the policy control function network element based on the value ranges of the parameters, the information about the policy that meets the requirement of the data transfer of the service, so that signaling overheads can be reduced, and operation complexity of the policy control function network element can be reduced.

According to a fourth aspect, a communication apparatus is provided. The apparatus may be a policy control function network element, or may be a component (for example, a processor, a chip, or a chip system) of the policy control function network element, or may be a logical module or software that can implement all or some functions of the policy control function network element. The apparatus has a function of implementing the first aspect and various possible implementations. The function may be implemented by using hardware, or may be implemented by executing corresponding software by hardware. The hardware or software includes one or more modules corresponding to the foregoing functions.

In a possible design, the apparatus includes a communication unit and a processing unit. The communication unit may be at least one of a sending unit, a receiving unit, a transceiver, a receiver, or a transmitter, and the communication unit may include a radio frequency circuit or an antenna. The processing unit may be a processor. Optionally, the apparatus further includes a storage unit, and the storage unit may be, for example, a memory. When the storage unit is included, the storage unit is configured to store a program or instructions. The processing unit is connected to the storage unit, and the processing unit may execute the program and the instructions that are stored in the storage unit, or instructions from other units, so that the apparatus performs the communication method according to the first aspect and the various possible implementations. In this design, the apparatus may be a policy control function network element.

In another possible design, when the apparatus is a chip, the chip includes a communication unit and a processing unit. The communication unit may be, for example, an input/output interface, a pin, or a circuit on the chip. The processing unit may be, for example, a processor. The processing unit may execute instructions, so that a chip in the policy control function network element performs the communication method according to the first aspect and any possible implementation. Optionally, the processing unit may execute instructions in a storage unit, and the storage unit may be a storage module in the chip, for example, a register or a cache. Alternatively, the storage unit may be located inside a communication device but outside the chip, for example, may be a read-only memory (read-only memory, ROM) or another type of static storage device that can store static information and instructions, such as a random access memory (random access memory, RAM).

The processor mentioned in the foregoing may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a fifth aspect, a communication apparatus is provided. The apparatus may be an application function network element, or may be a component (for example, a processor, a chip, or a chip system) of the application function network element, or may be a logical module or software that can implement all or some functions of the application function network element. The apparatus has a function of implementing the second aspect and various possible implementations. The function may be implemented by using hardware, or may be implemented by executing corresponding software by hardware. The hardware or software includes one or more modules corresponding to the foregoing functions.

In a possible design, the apparatus includes a communication unit and a processing unit. The communication unit may be, for example, at least one of a sending unit, a receiving unit, a transceiver, a receiver, or a transmitter, and the communication unit may include a radio frequency circuit or an antenna. The processing unit may be a processor.

Optionally, the apparatus further includes a storage unit, and the storage unit may be, for example, a memory. When the storage unit is included, the storage unit is configured to store a program or instructions. The processing unit is connected to the storage unit, and the processing unit may execute the program and the instructions that are stored in the storage unit, or instructions from other units, so that the apparatus performs the method according to the second aspect or any implementation of the second aspect.

In another possible design, when the apparatus is a chip, the chip includes a communication unit and a processing unit. The communication unit may be, for example, an input/output interface, a pin, or a circuit on the chip. The processing unit may be, for example, a processor. The processing module may execute a program or instructions, so that a chip in the application function network element performs the communication method according to the second aspect and any possible implementation.

Optionally, the processing unit may execute instructions in a storage unit, and the storage unit may be a storage module in the chip, for example, a register or a cache. Alternatively, the storage unit may be located inside a communication device but outside the chip, for example, may be a read-only memory (read-only memory, ROM) or another type of static storage device that can store static information and instructions, such as a random access memory (random access memory, RAM).

The processor mentioned in the foregoing may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a sixth aspect, a communication apparatus is provided. The apparatus may be a network data analytics function network element, or may be a component (for example, a processor, a chip, or a chip system) of the network data analytics function network element, or may be a logical module or software that can implement all or some functions of the network data analytics function network element. The apparatus has a function of implementing the second aspect and various possible implementations. The function may be implemented by using hardware, or may be implemented by executing corresponding software by hardware. The hardware or software includes one or more modules corresponding to the foregoing functions.

In a possible design, the apparatus includes a communication unit and a processing unit. The communication unit may be, for example, at least one of a sending unit, a receiving unit, a transceiver, a receiver, or a transmitter, and the communication unit may include a radio frequency circuit or an antenna. The processing unit may be a processor.

Optionally, the apparatus further includes a storage unit, and the storage unit may be, for example, a memory. When the storage unit is included, the storage unit is configured to store a program or instructions. The processing unit is connected to the storage unit, and the processing unit may execute the program and the instructions that are stored in the storage unit, or instructions from other units, so that the apparatus performs the method according to the second aspect or any implementation of the second aspect.

In another possible design, when the apparatus is a chip, the chip includes a communication unit and a processing unit. The communication unit may be, for example, an input/output interface, a pin, or a circuit on the chip. The processing unit may be, for example, a processor. The processing module may execute a program or instructions, so that a chip in the network data analytics function network element performs the communication method according to the second aspect and any possible implementation.

Optionally, the processing unit may execute instructions in a storage unit, and the storage unit may be a storage module in the chip, for example, a register or a cache. Alternatively, the storage unit may be located inside a communication device but outside the chip, for example, may be a read-only memory (read-only memory, ROM) or another type of static storage device that can store static information and instructions, such as a random access memory (random access memory, RAM).

The processor mentioned in the foregoing may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a seventh aspect, a computer storage medium is provided. The computer storage medium stores program code, and the program code indicates instructions for performing the methods according to the first aspect, the second aspect, the third aspect, and any possible implementation of the first aspect, the second aspect, and the third aspect.

According to an eighth aspect, a computer program product including computer instructions or computer code is provided. When the computer program product runs on a computer, the computer is enabled to perform the methods according to the first aspect, the second aspect, the third aspect, and any possible implementation of the first aspect, the second aspect, and the third aspect.

According to a ninth aspect, a communication system is provided, where the communication system includes an apparatus having functions for implementing the method and various possible designs according to the first aspect, an apparatus having functions for implementing the method and various possible designs according to the second aspect, and an apparatus having functions for implementing the method and various possible designs according to the third aspect. The apparatus having functions for implementing the method and the various possible designs according to the first aspect may be a policy control function network element, the apparatus having functions for implementing the method and the various possible designs according to the second aspect may be an application function network element, and the apparatus having functions for implementing the method and various possible designs according to the third aspect may be a network data analytics function network element.

Specifically, for beneficial effects of other aspects, refer to the beneficial effects described in the first aspect, the second aspect, and the third aspect.

### BRIEF DESCRIPTION OF DRAWINGS

FIG. 1 is an example of an architecture of a 5G communication system applicable to an embodiment of this application;
FIG. 2 is a schematic diagram of a service-based architecture;
FIG. 3A and FIG. 3B are a schematic diagram of a method for negotiating on a time window of data transfer of a service according to this application;
FIG. 4A and FIG. 4B are another schematic diagram of a method for negotiating on a time window of data transfer of a service according to this application;
FIG. 5 is another schematic diagram of a method for negotiating on a time window of data transfer of a service according to this application;
FIG. 6 is a schematic block diagram of an example of a communication apparatus according to this application; and
FIG. 7 is a schematic block diagram of another example of a communication apparatus according to this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future communication system.

To overcome challenges of wireless broadband technologies and maintain a leading edge of a 3GPP network, the 3GPP standard group formulates a next generation mobile communication network architecture (next generation system), which is referred to as a 5G network architecture. The architecture not only allows wireless technologies (such as LTE) defined by the 3GPP standard group to access a 5G core network (5G core network, 5GC), but also allows a non-3GPP access technology to access the 5GC through a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), or a next generation access gateway (next generation packet data gateway, NG-PDG). A core network function is divided into a user plane network element function (user plane function, UPF) and a control plane network element function (control plane function, CPF). The UPF is mainly responsible for packet data packet forwarding, control of quality of service (quality of service, QoS), charging information collection, and the like. The CPF is mainly responsible for user registration authentication, mobility management, and delivering of a data packet forwarding policy and a QoS control policy to the UPF. The CPF may be further divided into an access and mobility management function (access and mobility management function, AMF) and a session management function (session management function, SMF).

A core network device includes, for example, a mobility management entity (mobility management entity, MME), and a broadcast multicast service center (broadcast multicast service center, BMSC), or may include a corresponding functional entity in a 5G system, for example, a core network control plane (control plane, CP) or user plane (user plan, UP) network function, for example, an SMF or an AMF. The core network control plane may also be understood as a core network control plane function (control plane function, CPF) entity.

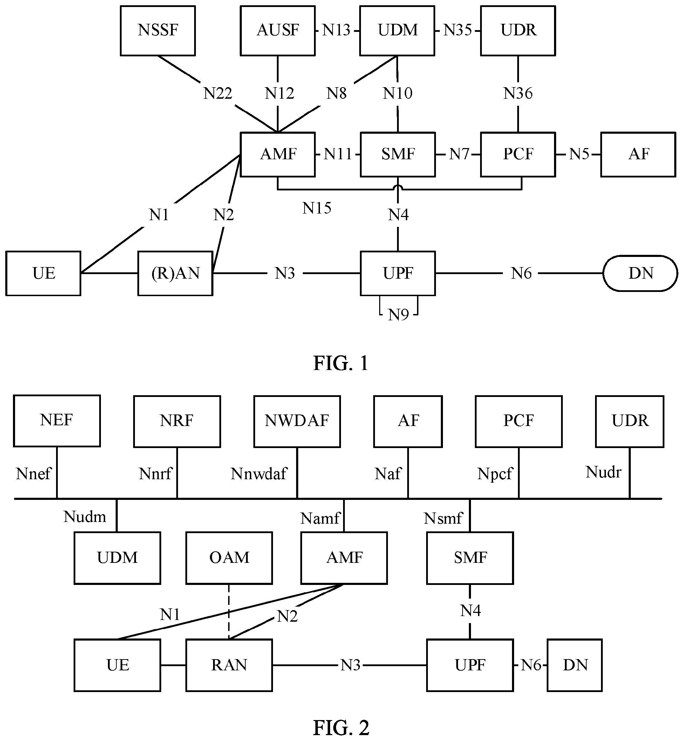

FIG. 1 is an example of an architecture of a communication system applicable to an embodiment of this application. Functions of a terminal device and each network entity are described as follows:
Terminal device: The terminal device may also be referred to as a terminal (terminal), a terminal device unit (subscriber unit), a terminal device station, a terminal device agent, a terminal device apparatus, an access terminal, a terminal in V2X communication, a subscriber unit, user equipment (user equipment, UE), a subscriber station, a mobile station (mobile station, MS), a remote station, a remote terminal, a mobile device, a user terminal, a wireless communication device, a user agent, or a user apparatus.

The user equipment in this embodiment of this application may also be a mobile phone (mobile phone), a tablet computer (pad), a computer with a wireless transceiver function, a holographic projector, a video player, a virtual reality (virtual reality, VR) terminal, an augmented reality (augmented reality, AR) terminal, a wireless terminal in industrial control (industrial control), a haptic terminal device, a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in transportation safety, a wireless terminal in a smart city (smart city), a wireless terminal in smart home, a cellular phone, a cordless phone, a session initiation protocol (session initiation protocol, SIP) telephone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general name of a wearable device developed by intelligently designing daily wear by using a wearable technology, such as head display XR glasses, gloves, watches, clothing, and shoes. The wearable device is a portable device that is directly worn on a body or integrated into clothes or accessories of a user. The wearable device is not only a hardware device, but also implement powerful functions through software support, data interaction, and cloud interaction. In a broad sense, wearable intelligent devices include full-featured and large-sized devices that can implement complete or partial functions without relying on smartphones, such as smart watches or smart glasses, and devices that focus on one type of application function and need to work with other devices such as smartphones, such as various smart bands or smart jewelry for monitoring physical signs.

Radio access network (radio access network, RAN): The radio access network is a network that consists of a plurality of 5G-RAN nodes, and implements a radio physical layer function, resource scheduling and radio resource management, radio access control, and a mobility management function. A 5G-RAN is connected to the UPF by using a user plane interface N3, to transmit data of the terminal device. The 5G-RAN establishes a control plane signaling connection to the AMF by using a control plane interface N2, to implement functions such as radio access bearer control. The RAN may be any device with a wireless transceiver function, and includes but is not limited to a 5G base station (5G node base, gNB), an evolved node base (evolved node base, eNB), a wireless access point (wireless access point, Wi-Fi AP), a world interoperability for microwave access base station (world interoperability for microwave access base station, WiMAX BS), a transmission reception point (transmission reception point, TRP), a wireless relay node, a wireless backhaul node, and the like.

An access network device in this embodiment of this application may alternatively be a device configured to communicate with the terminal device. The access network device may be a base transceiver station (base transceiver station, BTS) in a global system of mobile communication (global system of mobile communication, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB) in an LTE system, or may be a radio controller in a cloud radio access network (cloud radio access network, CRAN) scenario. Alternatively, the access network device may be a relay station, an access point, a vehicle-mounted device, a wearable device, an access network device in a future 5G network, an access network device in a future evolved PLMN network, or the like. This is not limited in this embodiment of this application.

In NR, a function of a base station is divided into two parts, which are referred to as central unit (central unit, CU)-distributed unit (distributed unit, DU) separation. From a perspective of a protocol stack, the CU includes an RRC layer and a PDCP layer of an LTE base station, and the DU includes a radio link control (radio link control, RLC) layer, a media access control (media access control, MAC) layer, and a physical (physical, PHY) layer of the LTE base station. In common 5G base station deployment, the CU and the DU may be physically connected by using an optical fiber, and a specifically defined F1 interface logically exists for communication between the CU and the DU. From a perspective of a function, the CU is mainly responsible for radio resource control and configuration, inter-cell mobility management, bearer management, and the like. The DU is mainly responsible for scheduling, and generating and sending of physical signals.

The base station may be a macro base station, a micro base station, a pico base station, a small station, a relay station, a balloon station, or the like.

Access and mobility management function (access and mobility management function, AMF): The access and mobility management function is mainly responsible for functions such as terminal device authentication, terminal device mobility management, network slice selection, and SMF selection, and in addition, is further responsible for transferring a user policy between the terminal device and a policy control function (policy control function, PCF).

SMF: The SMF is mainly responsible for a control plane function of session management of the terminal device, including user plane function (user plane function, UPF) selection and control, internet protocol (internet protocol, IP) address assignment, management of quality of service (quality of service, QoS) of a session, obtaining of a policy and charging control (policy and charging control, PCC) policy (from a PCF), and the like.

UPF: The UPF is used as an anchor point of a protocol data unit (protocol data unit, PDU) session connection, and is responsible for data packet filtering, data transfer/forwarding, rate control, charging information generating, and the like of the terminal device, and provides a connection to a data network (data network, DN).

DN: The DN is a specific data service network that the terminal device accesses. The DN is responsible for providing a carrier service, internet access, or a third-party service. The DN includes a server, and the server may implement video source encoding, rendering, and the like. A typical DN includes the Internet, an IP multi-media service (IP multi-media service, IMS) network, and the like. The DN is identified by a data network name (data network name, DNN) in a 5G network.

Unified data management (unified data management, UDM): The unified data management is mainly configured to: manage and control user data, for example, manage subscription information, including obtaining subscription information from a unified data repository (unified data repository, UDR) and providing the subscription information to another network element (for example, an AMF); generating a third generation partnership project (the third generation partnership project, 3GPP) authentication credential for the terminal device; registering and maintaining a network element that currently serves the terminal device, for example, an AMF (namely, a serving AMF) that currently serves the terminal device; and when subscription data is modified, notifying a corresponding network element.

UDR: The UDR is responsible for subscription management, access authorization, and authentication information generating of the terminal device.

Network exposure function (network exposure function, NEF): The network exposure function is configured to: connect another internal network element of the core network to an external application server or an application function (application function, AF) of the core network for interaction, to provide network capability information and network event exposure information for the external application server or the AF, or provide information about the external application server or the AF for the core network element. Alternatively, the network exposure function may expose services and capabilities of a 3GPP network function to the external application server or the AF, and may allow the AF to provide information for the 3GPP network function.

AF: The AF is configured to: transfer a requirement of an application side on a network side, for example, a QoS requirement or user status event subscription. The AF interacts with the core network element to provide some services, for example, interacts with the PCF to perform service policy control, and interacts with the NEF to obtain some network capability information or to provide some application information for a network, and provide some data network access point information for the PCF to generate routing information of a corresponding data service. The AF may be a third-party functional entity, or may be an application server (application server, AS) deployed by a carrier. For convenience, the AF is used as an example for description in the following embodiments.

Authentication server function (authentication server function, AUSF): The authentication server function is configured to perform security authentication on the terminal device when the terminal device accesses a network.

Network slice selection function (network slice selection function, NSSF): The network slice selection function selects a slice instance set for the terminal device, and determines an AMF set and allowed NSSAI for the terminal device.

PCF: The PCF provides configuration policy information for the terminal device, provides policy information of managing and controlling the terminal device for a control plane network element (for example, an AMF or an SMF) of the network, and generates a terminal device access policy and a QoS flow control policy.

Network data analytics function (network data analytics function, NWDAF): The network data analytics function provides data collection, training, analytics, and inference functions, and may be configured to: collect related data from a network element, a third-party service server, a terminal device, or a network management system, perform analytics and training based on the related data, and provides a data analytics result for the network element, the third-party service server, the terminal device, or the network management system, where the analytics result may assist the network in selecting a quality of service parameter of a service, or assist the network in executing traffic routing, or assist the network in selecting a background data transfer policy, or the like.

Interfaces between the network elements in FIG. 1 are shown in FIG. 1.

It should be noted that the foregoing "network element" may also be referred to as an entity, a device, an apparatus, a module, or the like. This is not particularly limited in this application. In addition, in this application, for ease of understanding and description, descriptions of the "network element" are omitted in some descriptions. For example, an NEF network element is referred to as an NEF for short. In this case, the "NEF" should be understood as the NEF network element or an NEF entity. Descriptions of same or similar situations are omitted in the following.

It should be noted that names of network elements included in FIG. 1 are only names, and the names constitute no limitation on functions of the network elements. In the 5G network and another future network, the foregoing network elements may alternatively have other names. This is not specifically limited in this embodiment of this application. For example, in a 6G network, some or all of the foregoing network elements may continue to use terms in 5G, or may have other names, and the like. Unified descriptions are provided herein, and details are not described below.

It should be noted that the network elements in FIG. 1 do not necessarily exist at the same time, and required network elements may be determined based on a requirement. A connection relationship between the network elements in FIG. 1 is not uniquely determined, and may be adjusted based on a requirement.

FIG. 2 is a schematic diagram of a service-based architecture. As shown in FIG. 2, Nnef, Nnrf, Nnwdaf, Naf, Npcf, Nudr, Nudm, Namf, and Nsmf are respectively service-based interfaces provided by the foregoing NEF, NRF, NWDAF, AF, PCF, UDR, UDM, AMF, and SMF, and are configured to invoke corresponding service-based operations. N1, N2, N3, N4, and N6 are interface serial numbers.

In FIG. 1 and FIG. 2, names and functions of interfaces between network elements are as follows:
(1) N1: N1 is an interface between the AMF and the terminal device, and may be configured to transfer a QoS control rule and the like to the terminal.
(2) N2: N2 is an interface between the AMF and the RAN, and may be configured to transfer radio bearer control information and the like from a core network side to the RAN.
(3) N3: N3 is an interface between the RAN and the UPF, and is mainly configured to transmit uplink and downlink user plane data between the RAN and the UPF.
(4) N4: N4 is an interface between the SMF and the UPF, and may be configured to transmit information between a control plane and a user plane, including delivery of a forwarding rule from the control plane to the user plane, a QoS control rule, a traffic statistics rule, and the like, and information reporting of the user plane.
(5) N5: N5 is an interface between the AF and the PCF, and may be configured to deliver an application service request and report a network event.
(6) N6: N6 is an interface between the UPF and the DN, and is configured to transmit uplink and downlink user data flows between the UPF and the DN.
(7) N7: N7 is an interface between the PCF and the SMF, and may be configured to deliver a protocol data unit (protocol data unit, PDU) session granularity and a service data flow granularity control policy.
(8) N8: N8 is an interface between the AMF and the UDM, and may be used by the AMF to obtain access and mobility management-related subscription data and authentication data from the UDM, may be used by the AMF to register current mobility management-related information of the terminal with the UDM, and the like.
(9) N9: N9 is a user plane interface between the UPFs, and is configured to transmit uplink and downlink user data flows between the UPFs.
(10) N10: N10 is an interface between the SMF and the UDM, and may be used by the SMF to obtain session management-related subscription data from the UDM, may be used by the SMF to register current session-related information of the terminal with the UDM, and the like.
(11) N11: N11 is an interface between the SMF and the AMF, and may be configured to: transmit PDU session tunnel information between the RAN and the UPF, transmit a control message sent to the terminal, transmit radio resource control information sent to the RAN, and the like.
(12) N12: N12 is an interface between the AMF and the AUSF, and may be used by the AMF to initiate an authentication procedure to the AUSF, where an SUCI may be carried as a subscription identifier.
(13) N13: N13 is an interface between the UDM and the AUSF, and may be used by the AUSF to obtain a user authentication vector from the UDM, to perform an authentication procedure.
(14) N15: N15 is an interface between the PCF and the AMF, and may be configured to deliver a terminal policy and an access control-related policy.
(15) N35: N35 is an interface between the UDM and UDR, and is used by the UDM to obtain subscriber subscription data information from the UDR.
(16) N36: N36 is an interface between the PCF and the UDR, and may be used by the PCF to obtain policy-related subscription data and application data-related information from the UDR.

Operation, administration, and management (operation, administration, and management, OAM) is mainly used by the NWDAF to collect network information, for example, collect RAN status information (uplink/downlink), load information (namely, radio resource utilization), and performance statistical information of each cell within an area of interest (area of interest, AoI) from the OAM.

The foregoing network element or function may be a network element in a hardware device, may be a software function running on dedicated hardware, or may be a virtualization function instantiated on a platform (for example, a cloud platform). Optionally, the foregoing network element or function may be implemented by one device, or may be jointly implemented by a plurality of devices, or may be a function module in a device. This is not specifically limited in this embodiment of this application.

It should be understood that FIG. 2 is merely an example of a schematic diagram of a network service-based architecture, and the schematic diagram of the network service-based architecture applicable to this embodiment of this application is not limited thereto. Any network service-based architecture that can implement functions of the foregoing network elements is applicable to this embodiment of this application.

For example, in some network architectures, network function entities such as the AMF, the SMF, the PCF, and the UDR are all referred to as network function (network function, NF) network elements. Alternatively, in some other network architectures, a set of network elements such as the AMF, the SMF, the PCF, and the UDM may be referred to as a control plane function (control plane function, CPF) network element.

The following describes specific solution details by using a network element in a 5G system (5G system, 5GS) as an example. It may be understood that, when the solution is used in an LTE system or a future communication system, each network element in the solution may be replaced with another network element having a corresponding function. This is not limited in this application.

With evolution of communication technologies, an AI/ML technology is widely used in many application fields of various industries due to advantages of high accuracy and high degree of automation. To smoothly complete transfer of an AI/ML model or data between the terminal device and the AF, the AF and the 5GS need to negotiate on data transfer (data transfer, DT) time of an AI/ML service in advance. Otherwise, service experience may deteriorate due to a case such as sudden network congestion, or even the service cannot run normally.

A data transfer (data transfer, DT) policy (DT policy) may also be referred to as a background data transfer policy (background data transfer policy, BDT policy), an AI/ML data transfer policy (AI/ML data transfer policy, AIMLDT policy), or the like. As an example instead of a limitation, the following uses the DT policy as an example for description.

As an example instead of a limitation, the following uses an example in which the terminal device is UE for description.

As an example instead of a limitation, the following uses the AI/ML service as an example for description. This embodiment of this application is also applicable to negotiating on a time window of data transfer of another service.

Next, an embodiment of this application provides a method for negotiating a time window of DT of an AI/ML service.

Step S310: An AF sends a DT policy negotiation request message to an NEF, where the DT policy negotiation request message may include the following information: an application service provider (application service provider, ASP) identifier, a quantity of UEs, an amount of data to be transmitted by each UE, and a time window (desired time window) that is of DT of a service and that is configured by the AF.

Specifically, the ASP identifier may alternatively represent an identifier of a service type. In this embodiment, the ASP identifier may represent an identifier of the AI/ML service; the quantity of UEs indicates a quantity of UEs that have an AI/ML service requirement, and the amount of data to be transmitted by each UE represents an amount of data to be transmitted by each of the UEs that have the AI/ML service requirement.

Specifically, the time window that is of the DT of the service and that is configured by the AF may alternatively be a first time window, or may alternatively be understood as a time window expected by the AF for performing DT of a service with the UE.

In addition, the DT policy negotiation request message may further include the following information: an external UE group identifier (external group identifier), network area information, indication information indicating a network to notify the AF after the DT policy is generated, a media access control (media access control, MAC) address or an internet protocol (internet protocol, IP) triplet for identifying the AS, requirements of the AF for a packet delay (packet delay), a packet error rate (packet error rate, PER), a packet loss rate (packet loss rate, PLR), a bit rate (bit rate), and a guaranteed bit rate (guaranteed bit rate, GBR), and the like. The packet delay may be a packet delay between the UE and the AS, or may be a packet delay between the UE and an anchor UPF, namely, a packet delay budget (packet delay budget, PDB). As an example instead of a limitation, the following uses an example in which the packet delay is the PDB for description.

Specifically, the network area information may be an area of interest (area of interest, AoI), where the AoI may correspond to a group of sub-areas, and each sub-area may be a tracking area (tracking area, TA), a cell (cell), or the like.

Specifically, requirements of the AF for the PDB, the PER, the PLR, the bit rate, the GBR, and the like may be carried in information about a first parameter. The requirements of the AF for the PDB, the PER, the PLR, the bit rate, the GBR, and the like may be parameter requirements for each UE, or may be an aggregation parameter requirement for a UE group (UE group). The requirement of the AF for the PDB, the PER, the PLR, the bit rate, the GBR, and the like may be a parameter requirement for uplink data transfer, a parameter requirement for downlink data transfer, or a parameter requirement for both the uplink and downlink data transfer.

If the foregoing requirement is a parameter requirement for each UE, there may be two cases. In a first case, the parameter requirements for each UE are the same. For example, it is required that a PDB of each UE is less than 20 ms, a PER of each UE is less than 0.01%, a PLR of each UE is less than 0.03%, a bit rate of each UE is greater than 100 Mbps, and a GBR of each UE is greater than 100 Mbps. In a second case, on a premise that the foregoing external UE group identifier is provided, different parameter requirements may be separately put forward for each UE in the UE group. For example, if an external UE group identifies three UEs, which are respectively denoted as UE 1, UE 2, and UE 3, the parameter requirements may be: A PDB of the UE 1 is less than 25 ms, a PER of the UE 1 is less than 0.02%, a PLR of the UE 1 is less than 0.03%, a bit rate of the UE 1 is greater than 120 Mbps, and a GBR of the UE 1 is greater than 120 Mbps; a PDB of the UE 2 is less than 20 ms, a PER of the UE 2 is less than 0.005%, a PLR of the UE 2 is less than 0.15%, a bit rate of the UE 2 is greater than 100 Mbps, and a GBR of the UE 2 is greater than 100 Mbps; and a PDB of the UE 3 is less than 50 ms, a PER of the UE 3 is less than 0.01%, a PLR of the UE 3 is less than 0.01%, a bit rate of the UE 3 is greater than 200 Mbps, and a bit rate of the UE 3 is greater than 200 Mbps.

If the foregoing requirement is a parameter requirement for the UE group, it indicates that the parameter requirement is the aggregation parameter requirement for the UE group. For example, the parameter requirement may be that a variance of latency (variance of latency) is less than 0.1, and it indicates that variances of latency of all UEs in the UE group need to be less than 0.1; or the parameter requirement may be that a maximum value of PERs (max of PER) is less than 0.01%, and it indicates that a maximum value of PERs of all UEs in the UE group needs to be less than 0.01%; or the parameter requirement may be that an average PLR is less than 0.03%, and it indicates that an average PLR of all UEs in the UE group needs to be less than 0.03%; or the parameter requirement may be that a minimum value of bit rates (min of bit rate) is greater than 100 Mbps, and it indicates that a minimum value of bit rates of all UEs in the UE group needs to be greater than 100 Mbps; or the parameter requirement may be that a minimum value of GBRs is greater than 100 Mbps, and it indicates that a minimum value of GBRs of all UEs in the UE group needs to be greater than 100 Mbps; or the parameter requirement may be a requirement for a maximum value, an average value, a variance, and the like of GBRs. A specific form of the parameter requirement is not limited in this application. The aggregation parameter requirement for the UE group may alternatively be in a form of a combination of the foregoing enumerated two or more parameter requirements.

In addition, if the foregoing requirement is the parameter requirement for the UE group, the parameter may alternatively be a statistical value of normalized parameters of different UEs in the UE group, and the AF needs to provide a normalized coefficient of a parameter requirement of a specific performance of the different UEs. For example, delay normalization coefficients of the UE 1, the UE 2, and the UE 3 in the UE group provided by the AF are respectively a1, a2, and a3. It is assumed that actual latencies of the UE 1, the UE 2, and the UE 3 in the UE group are respectively d1, d2, and d3. In this case, a latency parameter requirement may be that a variance of d1/a1, d2/a2, and d3/a3 is less than 0.1, or the latency parameter requirement may be that a variance of d1-a1, d2-a2, and d3-a3 is less than 0.1. Alternatively, GBR normalization coefficients of the UE 1, the UE 2, and the UE 3 in the UE group provided by the AF are respectively a4, a5, and a6. It is assumed that actual GBRs of the UE 1, the UE 2, and the UE 3 in the UE group are respectively d4, d5, and d6. In this case, a GBR parameter requirement may be that a variance of d4/a4, d5/a5, and d6/a6 is less than 0.1, or the GBR parameter requirement may be that a variance of d4-a4, d5-a5, and d6-a6 is less than 0.1.

Optionally, the information about the first parameter may further include a group of threshold information, including a threshold #1 that needs to be met by an average quantity of running RANs in a time window, a threshold #2 that needs to be met by resource utilization of a RAN in the time window, a threshold #3 that needs to be met by an average bit rate of a UE/a group of UEs of a service in the time window, a threshold #4 that needs to be met by a maximum bit rate of a UE/a group of UEs of a service in the time window, and the like. The information about the first parameter may further carry information about another threshold. This is not limited in this application. The threshold may subsequently assist the PCF in determining whether a time window meets a requirement of the AF for a GBR parameter.

It should be noted that the foregoing enumerated specific values are merely used to describe differences between various parameter requirements, and are not intended to limit the technical solutions of this application.

Step S314: After receiving the DT policy negotiation request message of the AF, the NEF authenticates the DT policy negotiation request message.

For example, the NEF stores a mapping relationship #1 between an AF identifier and whether the AF is allowed to obtain the DT policy and content of the DT policy that can be obtained by the AF. The NEF authorizes the DT policy negotiation request message only when the NEF determines, based on the AF identifier and the mapping relationship #1, that the AF is allowed to obtain the DT policy and that a parameter requirement carried in the DT policy negotiation request message is within a range allowed to be obtained; otherwise, the NEF rejects the DT policy negotiation request message of the AF.

For example, if the DT policy negotiation request message of the AF carries the information about a variance of latency parameter for the UE group, but the NEF finds, based on the AF identifier and the mapping relationship #1, that the network does not allow the AF to obtain the information about the variance of latency, the NEF rejects the DT policy negotiation request of the AF.

Step S318: After authenticating the DT policy negotiation request message of the AF, the NEF forwards the DT policy negotiation request message of the AF to the PCF.

Specifically, if the NEF stores a mapping relationship #2 between a generic public subscription identifier (generic public subscription identifier, GPSI) and a subscription permanent identifier (subscription permanent identifier, SUPI) of external network UE, after receiving the DT policy negotiation request message of the AF, the NEF converts the GPSI into the SUPI, and then sends the DT policy negotiation request message to a network function network element of the 5GS by using the SUPI. If the NEF does not store the mapping relationship #2 between the GPSI and the SUPI of the external network UE, the NEF first converts the GPSI of the external network UE into a GPSI of internal network UE, and then sends a request to a UDR to obtain an SUPI corresponding to the GPSI of the internal network UE.

Specifically, the NEF may forward the DT policy negotiation request message of the AF to the PCF by using Npcf_DTPolicyControl_Create request signaling.

The information about the parameter carried in the DT policy negotiation request message forwarded in step S318 is consistent with the information about the parameter carried in the DT policy negotiation request message in step S310, and details are not described herein again.

Optionally, in step S322, the PCF sends an existing DT policy request message to the UDR, where the existing DT policy request message requests to obtain an existing DT policy stored in the UDR.

Specifically, the NEF may send the existing DT policy request message to the UDR by using Nudr_DM_Query request signaling.

Optionally, in step S326, the UDR feeds back the existing DT policy to the NEF.

Specifically, the UDR may feed back the existing DT policy to the NEF by using Nudr_DM_Query response signaling.

Step S330: The PCF sends a subscription message to an NWDAF, where the subscription message may alternatively be a request message, and the subscription message or the request message requests the NWDAF to perform network performance analytics.

Specifically, the PCF may send the subscription message to the NWDAF by using Nnwdaf_AnalyticsSubscription_Subscribe signaling.

Specifically, the PCF may alternatively send the request message to the NWDAF by using Nnwdaf_AnalyticsInfo_Request signaling.

The subscription message or the request message may include the following information: an analytics request identifier (analytics identifier), network area information, a UE group identifier, and the like.

Specifically, the foregoing analytics request identifier identifies a type of an analytics that the PCF expects to obtain from the NWDAF.

Specifically, the foregoing network area information indicates an area range to which an analytics result is applicable. For example, the area range may be an AoI, where the AoI may correspond to a group of sub-areas, and each sub-area may be a TA, a cell (cell), or the like.

Specifically, the UE group identifier identifies a group of UEs. For example, the identifier may be single network slice selection assistance information (single network slice selection assistance information, S-NSSAI), and indicates all UEs located in the network slice. Alternatively, the identifier may be an identifier of a set of UE identifiers, for example, an identifier of a set of SUPIs.

Step S334: After receiving the subscription message or the request message from the PCF, the NWDAF performs network performance analytics, and derives the analytics result.

Specifically, the NWDAF collects network information. For example, the NWDAF collects uplink and downlink status information and load information of a RAN from an OAM, collects statistical information of performance of each cell in the AoI, collects load information of each network element from an NRF, and collects information about a quantity of UEs in the AoI from an AMF network element. Then, the NWDAF performs data analytics by using the foregoing collected information, to obtain prediction information of network performance of each UE sub-group in each time window of each sub-area.

In addition, to derive a prediction result of the GBR, the NWDAF may collect information shown in Table 1 below.

**Table 1**

| Data type | Data source | Detailed descriptions |
|---|---|---|
| UE ID | SMF/AF | UE identifier, where a UE identifier provided by the SMF is the SUPI, and a UE identifier provided by the AF is the GPSI |
| UE group ID | SMF/AF | UE group identifier, where a UE group identifier provided by the SMF is an internal UE group ID, and a UE group identifier provided by the AF is an external UE group ID |
| S-NSSAI | SMF | Network slice identifier |
| DNN | SMF | Data network name of a PDU service connection |
| Application ID | SMF/AF | Application identifier |
| UE communication | | Communication description information of each application |
| >communication start | UPF/AF | Timestamp when communication starts |
| >communication stop | UPF/AF | Timestamp when communication stops |
| >guaranteed bit rate | SMF | Uplink/downlink GBR |

The NWDAF may predict, based on information about a transfer time window of first service data (for example, the timestamp when the communication starts and the timestamp when the communication stops) and uplink/downlink GBR information of one UE or a group of UEs of a first service obtained by the SMF in the transfer time window, uplink/downlink GBR related information of one UE or a group of UEs of the first service in a future transfer time window.

As an example instead of a limitation, the foregoing one UE is identified by the UE ID, and the foregoing group of UEs is identified by the UE group ID.

Specifically, the predicted GBR related information may be a predicted value of a GBR of each UE, or may be a statistical value of a GBR of a UE group, where the statistical value may be a maximum value, a minimum value, an average value, a variance, or the like of the GBR of the UE group. This is not limited in this application.

Specifically, the prediction information of the network performance may be information about a fourth parameter, and includes prediction information of uplink/downlink parameters of a PDB, a PER, a PLR, a bit rate, and a GBR of each UE sub-group in each time window of each sub-area, or includes statistical information of prediction information of uplink/downlink parameters of a PDB, a PER, a PLR, bit rate, and a GBR of each UE sub-group in each time window of each sub-area. For example, the prediction information of the network performance includes predicted values of uplink/downlink parameters of a PDB, a PER, a PLR, a bit rate, and a GBR of each UE of a UE sub-group (UE ID list1) in a sub-area (area1) in a time window (Time window1). For another example, the prediction information of the network performance includes statistical information of the predicted values of the parameters of the uplink/downlink PDB, the PER, the PLR, the bit rate, and the GBR of the UE sub-group (UE ID list 1) of the sub-area (area 1) in the time window (Time window 1), where the statistical information may be an average value, a variance, a maximum value, a minimum value, or the like of the predicted values of the parameters of the PDB, the PER, the PLR, the bit rate, and the GBR.

Specifically, the load information may indicate radio resource utilization.

Specifically, the statistical information of the performance of each cell may include statistical information of each cell such as reference signal received power (reference signal received power, RSRP), reference signal received quality (reference signal received quality, RSRQ), and signal to interference plus noise ratio (signal to interference plus noise ratio, SINR).

Specifically, the process in which the NWDAF performs data analytics by using the collected information may alternatively be a process of training an AI model, and the NWDAF performs data inference by using the AI model to obtain predicted network performance information.

Specifically, the predicted network performance information may include RAN status information, RAN resource utilization, communication performance information, mobility performance information, and predicted values of an uplink/downlink PDB/PER/PLR/bit rate/GBR of each UE, related statistical values of prediction information of an uplink/downlink PDB/PER/PLR/bit rate/GBR of the UE group, or the like.

For example, the analytics result derived by the NWDAF may be in the following form:
Time window1, area1, UE ID list1:Network Performance analytics1;
Time window2, area2, UE ID list2:Network Performance analytics2; ...
Time windowi, areai, UE ID listi:Network Performance analyticsi.

The time window (Time window) is information that needs to be carried in the analytics result, and the area information (area) and the UE identifier list (UE ID list) are optional information. The network performance analytics (Network Performance Analytics) carries the prediction information of the network performance of each UE sub-group in each time window of each sub-area obtained by the NWDAF, or in other words, may include the RAN status information, the RAN resource utilization, the communication performance information, the mobility performance information, and the predicted values of the uplink/downlink PDB/PER/PLR/bit rate/GBR of each UE, the related statistical values of the prediction information of the uplink/downlink PDB/PER/PLR/bit rate/GBR of the UE group, or the like that are predicted by the NWDAF.

Step S338: The NWDAF sends a subscription message feedback message to the PCF, where the subscription message feedback message may alternatively be a notification message, and the subscription message feedback message may alternatively be a request message response message.

Specifically, the NWDAF may send the notification message to the PCF by using Nnwdaf_AnalyticsSubscription_Notify signaling.

Specifically, the NWDAF may alternatively send the request message response message to the PCF by using Nnwdaf_AnalyticsInfo_Response signaling.

The notification message or the request message response message may include information about a time window predicted by the NWDAF and information about a predicted value of a first parameter in the time window.

Step S342: The PCF may generate a DT policy candidate list based on the information carried in the DT policy negotiation request message and the analytics result derived by the NWDAF, where the DT policy candidate list is denoted as a DT policy #1. Optionally, the PCF may alternatively generate the DT policy #1 based on the information carried in the DT policy negotiation request message, the existing DT policy provided by the UDR, and the analytics result derived by the NWDAF.

Each DT policy in the DT policy #1 may include a plurality of time windows (time window), and optionally, each time window has corresponding applicable area information (area) and applicable UE information (UE ID list) of the DT policy. In addition, each time window has corresponding charge rate information (charge rate), maximum aggregated bit rate information (maximum aggregated bit rate), and QoS parameter information. The QoS parameter information may be QoS parameter information included in the subscription message feedback message obtained by the NWDAF, such as the predicted values of the uplink/downlink PDB/PER/PLR/bit rate/GBR of each UE, or the related statistical values of prediction information of the uplink/downlink PDB/PER/PLR/bit rate/GBR of the UE group. In addition, the QoS parameter information may alternatively be QoS parameter information generated based on requirements of the AF for a PDB, a PER, a PLR, a bit rate, a GBR, and the like. For example, the AF requires that the PDB of each UE is less than 20 ms, the PER of each UE is less than 0.01%, the PLR of each UE is less than 0.03%, the bit rate of each UE is greater than 100 Mbps, and the GBR of each UE is greater than 100 Mbps. Therefore, the QoS parameter information may be set to: PDB = 20 ms, maximum PER = 0.01%, maximum PLR = 0.03%, minimum bit rate = 100 Mbps, and GBR = 100 Mbps.

For example, the DT policy #1 may be in the following form:
- DT policy1
   Time window11, area11, UE ID list 11:charge rate 11,maximum aggregated bit rate 11,QoS parameters 11;
   Time window12, area12, UE ID list 12:charge rate 12,maximum aggregated bit rate 12,QoS parameters 12;
- DT policy 2
   Time window 21, area 21, UE ID list 21:charge rate 21,maximum aggregated bit rate 21,QoS parameters 21;
   Time window 22, area 22, UE ID list 22:charge rate 22,maximum aggregated bit rate 22,QoS parameters 22;
   ...
- DT policy i
   Time window i1, area i1, UE ID listi1:charge rate i1,maximum aggregated bit rate i1,QoS parameters i1;
   Time window i2, area i2, UE ID listi2:charge rate i2,maximum aggregated bit rate i2,QoS parameters i2;
   Time window i2, area i3, UE ID listi3:charge rate i3,maximum aggregated bit rate i3,QoS parameters i3.

For example, when generating the DT policy #1, the PCF compares whether information about the existing DT policy provided by the UDR conforms to information of the parameter requirement of the DT carried in the DT policy negotiation request message, and compares whether information about the DT policy included in the subscription message feedback message sent by the NWDAF conforms to the information of the parameter requirement of the DT carried in the DT policy negotiation request message. For example, a piece of information about the DT policy included in the subscription message feedback message sent by the NWDAF is: A time window is [2022-01-01 11:37:21, 2022-01-01 11:42:37], a charge rate is 0.5 yuan/h, a maximum aggregated bit rate (maximum aggregated bit rate) is 500 Mbps, an average PDB is 20 ms, a maximum PER is 0.01%, the GBR is 100 Mbps, and the like. The PCF detects that the parameter requirement of the DT carried in the DT policy negotiation request message is that the average PDB is less than 15 ms. It is clear that the DT policy included in the subscription message feedback message sent by the NWDAF cannot meet a requirement of the AF, and the PCF does not add the DT policy to the DT policy #1.

Specifically, the PCF may determine, based on a group of threshold information that may be further included in the information about the first parameter, whether a time window meets the requirement of the AF for the GBR parameter.

For example, when one or more of the following conditions are met, the PCF determines that a time window meets the requirement of the GBR parameter: (1) An average quantity of running RANs in the time window meets the threshold #1; (2) Resource utilization of a RAN in the time window meets the threshold #2; (3) An average bit rate of a UE/a group of UEs of a service in the time window meets the threshold #3; (4) A maximum bit rate of a UE/a group of UEs of a service in the time window meets the threshold #4.

Specifically, if the time window meets the parameter requirement of the AF, the PCF may determine a DT policy based on the time window, and designate a GBR parameter value required by the AF as a GBR parameter value in the determined DT policy. The determined DT policy may be understood as a policy in the policy #1.

In addition, when the AF does not provide a requirement for the GBR parameter of the first service, the PCF may generate the threshold #1, the threshold #2, the threshold #3, and the threshold #4 based on a local policy (local policy), and then determines whether a time window meets a requirement of the GBR based on the generated four thresholds.

Step S346: The PCF sends a notification message of the DT policy #1 to the NEF.

Specifically, the PCF may send the notification message to the NEF by using Npcf_DTPolicyControl_Create response signaling.

For steps S350 to S354, refer to steps S314 to S318. The NEF authenticates the notification message sent by the PCF.

If the NEF checks that the notification message of the DT policy #1 sent by the PCF is valid, the NEF forwards the notification message of the DT policy #1 of the PCF to the AF.

Specifically, the NEF may forward the notification message of the DT policy #1 of the PCF to the AF by using Nnef_DTNegotiation_Create response signaling.

Step S358: After receiving the notification message of the DT policy #1, the AF selects a DT policy from the DT policy #1 for data transfer of an application layer, and notifies the PCF of the selected DT policy. The PCF stores information about the DT policy selected by the AF in the UDR, to retrieve and execute the DT policy from the UDR when a time window of DT of a service arrives.

The information about the DT policy stored by the PCF in the UDR includes the following information: the DT policy selected by the AF, a DT policy reference identifier, network area information to which the DT policy is applicable, an ASP identifier, a quantity of UEs that may perform data transfer, a data amount to be transmitted by each UE, a time window that is of DT of a service and that is configured by the AF, a MAC address or an IP triplet for identifying the AS, one or more optional routing paths, whether the AF supports DT policy renegotiation, and the like.

Specifically, the DT policy reference identifier is used by the AF to send a DT policy establishment request to the PCF based on the DT policy reference identifier when a time point of a selected DT policy is about to arrive, and the PCF searches for a corresponding DT policy from the UDR based on the DT policy reference identifier, and establishes a corresponding policy.

Specifically, whether the AF supports the DT policy renegotiation indicates whether the AF can renegotiate on a new DT policy with the network when finding, in a DT process, that a current network condition cannot meet a service requirement.

Optionally, in step S362, if the AF supports the DT policy renegotiation, and the AF finds that the current network condition cannot meet the service requirement in the DT process, the AF selects a new DT policy from the DT policy #1 for data transfer.

Optionally, in step S364 to step S370, the AF sends a renegotiation request message to the NEF, where the renegotiation request message may be transferred to the NEF by using Nnef_DTNegotiation_Update request signaling, and the renegotiation request message includes a new DT policy reference identifier reselected by the AF and the DT policy corresponding to the reference identifier. After authenticating that the signaling is valid, the NEF may forward the renegotiation request message to the PCF by using Npcf_DTPolicyControl_Update request signaling.

The foregoing DT policy may alternatively be a DT policy that is modified by the AF and meets a requirement of the AF, but the AF does not modify the DT policy reference identifier corresponding to the DT policy.

Optionally, in step S372 to step S376, the PCF sends a renegotiation request message feedback message to the AF through the NEF, where the renegotiation request message feedback message may be an acknowledgment message, and the acknowledgment message is used to confirm that the DT policy selected by the AF has changed.

Optionally, in step S378 to step S380, the PCF sends a renegotiation update message to the UDR, where the renegotiation update message is used to store the new DT policy reference identifier selected through renegotiation, the DT policy corresponding to the reference identifier, and related information in the UDR, where the related information includes information included in the information about the DT policy stored by the PCF in the UDR. Details are not described herein again. After completing the storing, the UDR sends a renegotiation update message feedback message to the PCF, where the renegotiation update message feedback message may alternatively be an acknowledgment message.

Specifically, the renegotiation update message may be transferred to the UDR by using Nudr_DM_Update request signaling, and the foregoing renegotiation update message feedback message may be transferred to the PCF by using Nudr_DM_Update response signaling.

In addition, if the PCF decides to locally store the new DT policy reference identifier selected through renegotiation, the DT policy corresponding to the reference identifier, and the related information, the PCF does not store the information in the UDR.

The AF adds the parameter requirements for the uplink/downlink PDB, PER, PLR, bit rate, GBR, or the like to the negotiation request message, and can predict network performance information of each UE sub-group in each time window of each sub-area through network analytics and carry the network performance information in information about each DT policy, to assist the AF in selecting a more appropriate DT policy.

As the AF adds more parameter requirements, an output of the network performance analytics result provided by the NWDAF increases. This application also provides a technical solution for improving a feedback result output by an NWDAF side.

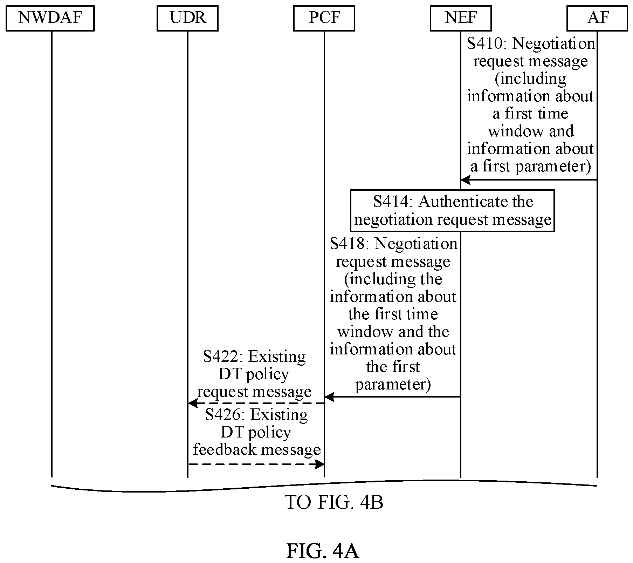

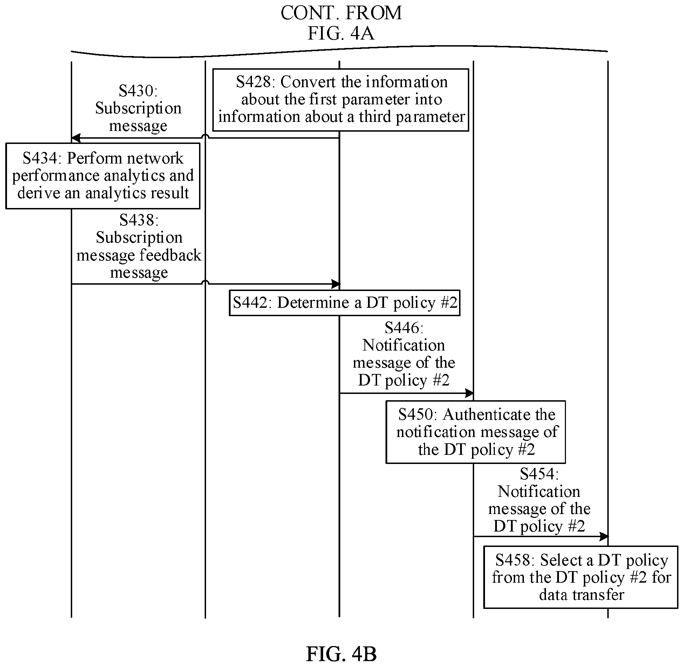

FIG. 4A and FIG. 4B show another method for negotiating transfer time of an AI/ML service according to an embodiment of this application.

For step S410 to step S426, refer to step S310 to step S326. Details are not described herein again.

Step S428: The PCF converts the information about the first parameter into information about a third parameter.

For example, if the information about the first parameter includes the requirements of the AF for the PDB, the PER, the PLR, the bit rate, and the GBR of each UE, and the requirements are respectively: PDB = 20 ms, PER = 0.01%, PLR = 0.03%, bit rate = 500 Mbps, and GBR = 500 Mbps, the PCF may generate the information about the third parameter based on the information about the first parameter. The information about the third parameter includes information about value ranges of the parameters. For example, the value ranges of the parameters are respectively: PDB ≤ 20 ms, PER ≤ 0.01%, PLR ≤ 0.03%, bit rate ≥ 500 Mbps, and GBR ≥ 500 Mbps. For example, the information about the third parameter may be the same as the information about the first parameter. For example, if the information about the first parameter includes requirements of the AF for the PDB, the PER, the PLR, and the bit rate of each UE, and the requirements are respectively: PDB < 20 ms, PER < 0.01%, PLR < 0.03%, bit rate > 500 Mbps, and GBR > 500 Mbps, and then the PCF may generate the information about the third parameter based on the information about the first parameter. The information about the third parameter includes the information about the value ranges of the parameters. For example, the value ranges of the parameter are respectively: PDB < 20 ms, PER < 0.01%, PLR < 0.03%, bit rate > 500 Mbps, and GBR > 10 Mbps.

Step S430: The PCF sends a subscription message to an NWDAF, where the subscription message may alternatively be a request message, and the subscription message or the request message requests the NWDAF to perform network performance analytics.

Optionally, the subscription message includes that the PCF converts the parameter requirements of the AF into the information about the value ranges, where the information about the value ranges may correspond to the information about the third parameter.

Optionally, the information about the third parameter may further include a group of threshold information, including the threshold #1 that needs to be met by an average quantity of running RANs in a time window, the threshold #2 that needs to be met by resource utilization of a RAN in the time window, the threshold #3 that needs to be met by an average bit rate of a UE/a group of UEs of a service in the time window, the threshold #4 that needs to be met by a maximum bit rate of a UE/a group of UEs of a service in the time window, and the like. The information about the third parameter may further carry information about another threshold. This is not limited in this application. The threshold may assist the NWDAF in determining whether a time window meets the requirement of the AF for the GBR parameter.

Specifically, the PCF may send the subscription message to the NWDAF by using Nnwdaf_AnalyticsSubscription_Subscribe signaling.

Specifically, the PCF may alternatively send the request message to the NWDAF by using Nnwdaf_AnalyticsInfo_Request signaling.

The subscription message or the request message may further include the following information: an analytics request identifier, network area information, a UE group identifier, and the like.

Specifically, the foregoing analytics request identifier identifies a type of an analytics that the PCF expects to obtain from the NWDAF.

Specifically, the foregoing network area information indicates an area range to which an analytics result is applicable. For example, the area range may be an AoI, where the AoI may correspond to a group of sub-areas, and each sub-area may be a TA, a cell (cell), or the like.

Specifically, the UE group identifier identifies a group of UEs. For example, the identifier may be S-NSSAI, and indicates all UEs located in a network slice. Alternatively, the identifier may be an identifier of a set of UE identifiers, for example, an identifier of a set of SUPIs.

Step S434: After receiving the subscription message or the request message from the PCF, the NWDAF performs network performance analytics, and derives the analytics result.

Specifically, the NWDAF collects network information. For example, the NWDAF collects uplink and downlink status information and load information of a RAN from OAM, collects statistical information of performance of each cell in the AoI, collects load information of each network element from an NRF, and collects information about a quantity of UEs in the AoI from an AMF network element. Then, the NWDAF performs data analytics by using the foregoing collected information, to obtain prediction information of network performance of each UE sub-group in each time window of each sub-area.

Specifically, the prediction information of the network performance may be information about a fourth parameter, and includes prediction information of uplink/downlink parameters of a PDB, a PER, a PLR, a bit rate, and a GBR of each UE sub-group in each time window of each sub-area, or includes statistical information of prediction information of uplink/downlink parameters of a PDB, a PER, a PLR, bit rate, and a GBR of each UE sub-group in each time window of each sub-area. For example, the prediction information of the network performance includes predicted values of uplink/downlink parameters of a PDB, a PER, a PLR, a bit rate, and a GBR of each UE of a UE sub-group (UE ID list 1) in a sub-area (area 1) in a time window (Time window 1). For another example, the prediction information of the network performance includes statistical information of the predicted values of the parameters of the uplink/downlink PDB, the PER, the PLR, the bit rate, and the GBR of the UE sub-group (UE ID list 1) of the sub-area (area 1) in the time window (Time window 1), where the statistical information may be an average value, a variance, a maximum value, a minimum value, or the like of the predicted values of the parameters of the PDB, the PER, the PLR, the bit rate, and the GBR.

Specifically, the load information may indicate radio resource utilization.

Specifically, the statistical information of the performance of each cell may include statistical information of RSRP, RSRQ, an SINR, and the like of each cell.

Specifically, the process in which the NWDAF performs data analytics by using the collected information may alternatively be a process of training an AI model, and the NWDAF performs data inference by using the AI model to obtain predicted network performance information.

Specifically, the predicted network performance information may include RAN status information, RAN resource utilization, communication performance information, mobility performance information, and predicted values of an uplink/downlink PDB/PER/PLR/bit rate/GBR of each UE, related statistical values of prediction information of an uplink/downlink PDB/PER/PLR/bit rate/GBR of the UE group, or the like.

For example, the analytics result derived by the NWDAF may be in the following form:
- Time window 1, area 1, UE ID list 1:Network Performance analytics 1;
- Time window 2, area 2, UE ID list 2:Network Performance analytics 2;
   ...
- Time window i, area i, UE ID list i:Network Performance analytics i.

The time window (Time window) is information that needs to be carried in the analytics result, and the area information (area) and the UE identifier list (UE ID list) are optional information. The network performance analytics (Network Performance Analytics) carries the prediction information of the network performance of each UE sub-group in each time window of each sub-area obtained by the NWDAF, or in other words, may include the RAN status information, the RAN resource utilization, the communication performance information, the mobility performance information, and the predicted values of the uplink/downlink PDB/PER/PLR/bit rate/GBR of each UE, the related statistical values of the prediction information of the uplink/downlink PDB/PER/PLR/bit rate/GBR of the UE group, or the like that are predicted by the NWDAF.

Specifically, if prediction information of a parameter of a UE in a time window of a sub-area or statistical information of a parameter of a UE sub-group in a time window of a sub-area does not meet a requirement of the information about the third parameter, the NWDAF may not send the analytics result to the PCF.

For example, a time window determined by the NWDAF and related information corresponding to the time window are: In a time window 1, a predicted average PDB is 20 ms, a predicted maximum PER is 0.01%, and a predicted average GBR is 100 Mbps. If an average PDB in the information about the third parameter is less than 15 ms, it is clear that the time window and related information corresponding to the time window cannot meet the requirement of the value range included in the information about the third parameter, and the NWDAF may not send the analytics result to the PCF.

Step S438: The NWDAF sends a subscription message feedback message to the PCF, where the subscription message feedback message may alternatively be a notification message, and the subscription message feedback message may alternatively be a request message response message.

Specifically, the NWDAF may send the notification message to the PCF by using Nnwdaf_AnalyticsSubscription_Notify signaling.

Specifically, the NWDAF may alternatively send the request message response message to the PCF by using Nnwdaf_AnalyticsInfo_Response signaling.

The notification message or the request message response message may include information about a time window predicted by the NWDAF and information about a predicted value of a third parameter in the time window.

It should be noted that the notification message or the request message response message does not include information about a time window that is derived by the NWDAF and that does not meet the requirements of the value ranges of the parameters in the information about the third parameter and the information about the predicted value of the third parameter in the time window.

Step S442: The PCF may generate a candidate list of candidate DT policies based on the analytics result sent by the NWDAF, where the candidate list is denoted as a DT policy #2.

Specifically, if the PCF sends a group of threshold information in the information about the third parameter to the NWDAF in step S430, the NWDAF may determine whether the prediction result meets threshold requirements of the parameters.

Optionally, in step S430, if the PCF does not send a group of threshold information in the information about the third parameter to the NWDAF, the NWDAF may generate the threshold #1, the threshold #2, the threshold #3, and the threshold #4 based on a local policy (local policy), and then determines whether a time window meets a requirement of the GBR based on the generated four thresholds.

For example, when one or more of the following conditions are met, the NWDAF determines that a time window meets the requirement of the GBR parameter: (1) An average quantity of running RANs in the time window meets the threshold #1; (2) Resource utilization of a RAN in the time window meets the threshold #2; (3) An average bit rate of a UE/a group of UEs of a service in the time window meets the threshold #3; (4) A maximum bit rate of a UE/a group of UEs of a service in the time window meets the threshold #4.

Because the analytics results sent by the NWDAF all meet the requirements of the value ranges of the parameters, or the analytics results sent by the NWDAF all meet the parameter requirements of the data transfer configured by the AF, the PCF may directly generate the DT policy #2 based on the analytics result sent by the NWDAF.

Optionally, the PCF may alternatively generate the DT policy #2 based on the third parameter information or the first parameter information, the existing DT policy provided by the UDR, and the analytics result sent by the NWDAF.

When determining whether the existing DT policy provided by the UDR can be added to the DT policy #2, information about the parameters or the information about the third parameter carried in a DT policy negotiation request message needs to be used to determine whether the existing DT policy provided by the UDR meets the parameter requirements of the AF.

For example, the NWDAF generates X DT policies after the network analytics and derivation, and P DT policies in the X DT policies meet the requirements of value range of the parameters. Next, the NWDAF may send the P DT policies to the PCF.

For step S446 to step S458, refer to step S346 to step S358. Details are not described herein again.

Optionally, if the AF supports the DT policy renegotiation, and the AF finds that the current network condition cannot meet the service requirement in the DT process, the AF may select a new DT policy from the DT policy #2 for data transfer. For a specific renegotiation process, refer to step S362 to step S380. Details are not described herein again.

The PCF sends the information about the value ranges of the parameters to the NWDAF, so that the NWDAF can perform a determining action after the network analytics result is obtained, to reduce feedback overheads from the NWDAF to the PCF and reduce operation complexity on a PCF side.

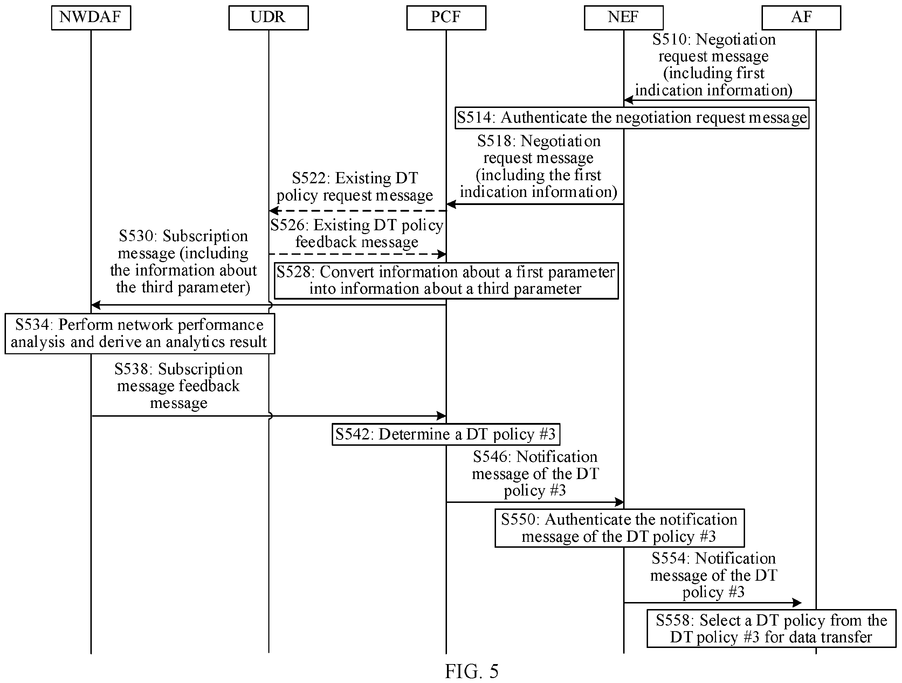

The foregoing embodiment involves selection of a DT policy corresponding to a time window. However, an actual AI/ML service may need to transmit a very large amount of data, and a to-be-transmitted AI/ML model or data may reach a gigabit order of magnitude. Therefore, the network may not be able to find a consecutive time window that can meet the DT parameter requirements expected by the AF. Therefore, this application provides still another method for negotiating data transfer time of an AI/ML service, as shown in FIG. 5.

Step S510: An AF sends a DT policy negotiation request message to an NEF, where the DT policy negotiation request message may include the following information: an ASP identifier, a quantity of UEs, an amount of data to be transmitted by each UE, a time window that is of DT of a service and that is configured by the AF, indication information indicating whether a plurality of scattered time windows can be included, and optionally, a requirement for a time interval between the plurality of scattered time windows.

Specifically, the indication information indicating whether a plurality of scattered time windows can be included indicates whether each of a plurality of DT policies fed back to the AF can include a plurality of scattered time windows.

Specifically, the indication information indicating whether a plurality of scattered time windows can be included may correspond to first indication information.

For example, the indication information may be one number of bits. When a value of the one number of bits is "0", it indicates that each of a plurality of DT policies is not allowed to include a plurality of scattered time windows, or in other words, each of a plurality of DT policies includes one consecutive time window. This scenario is applicable to a scenario in which some AI/ML services of the AF cannot be interrupted after starting, for example, a real-time image recognition service executed by the AF. When the value of the one number of bits is "1", it indicates that each of a plurality of DT policies is allowed to include a plurality of scattered time windows, or in other words, each of a plurality of DT policies may include one consecutive time window, or may include a plurality of scattered time windows.

Specifically, when the AF allows each of a plurality of DT policies to include a plurality of scattered time windows, a time interval between the plurality of scattered time windows may be set based on a requirement for a time interval between the plurality of scattered time windows.

Specifically, when a plurality of scattered time windows are allowed to be included, a requirement for a time interval between the plurality of scattered time windows may correspond to a first threshold.

For example, for a service that has a high real-time requirement, a time interval between the plurality of scattered time windows may be set to a smaller value, to prevent an excessively long interruption time in a data transfer process from affecting service experience; and for a service that has a low real-time requirement, for example, a download service, the time interval of the plurality of scattered time windows may be set to a larger value, so that the network may find the plurality of scattered time windows that meet the parameter requirements configured by the AF more easily.

Specifically, the ASP identifier may alternatively represent an identifier of an AI/ML service type; the quantity of UEs indicates a quantity of UEs that have an AI/ML service requirement; and the amount of data to be transmitted by each UE represents an amount of data to be transmitted by each of the UEs that have the AI/ML service requirement.

In addition, the DT policy negotiation request message may further include the following information: an external UE group identifier, network area information, indication information indicating a network to notify the AF after a DT policy is generated, a MAC address or an IP triplet for identifying an AS, requirements of the AF for an uplink/downlink PDB, PER, PLR, and bit rate/GBR, or the like.

Specifically, the foregoing network area information may be an AoI, where the AoI may correspond to a group of sub-areas, and each sub-area may be a TA, a cell (cell), or the like.

Specifically, the requirements of the AF for the uplink/downlink PDB, PER, PLR, bit rate/GBR, or the like may be carried in information about the first parameter. The requirements of the AF for the uplink/downlink PDB, PER, PLR, and bit rate/GBR may be parameter requirements for each UE, or may be aggregation parameter requirements for a UE group (UE group).

In addition, the negotiation request message in step S510 may further carry information about value ranges of uplink/downlink parameters such as the PDB, the PER, the PLR, the bit rate, and the GBR of the AF.

For example, if the information about the first parameter includes requirements of the AF for the uplink/downlink PDB, PER, PLR, bit rate, and GBR of each UE, and the requirements are respectively: PDB = 20 ms, PER = 0.01%, PLR = 0.03%, bit rate = 500 Mbps, and GBR = 100 Mbps, the AF may generate information about a third parameter based on the information about the first parameter. The information about the third parameter includes information about the value ranges of the parameters. For example, the value ranges of the parameters are respectively: PDB < 20 ms, PER < 0.01%, PLR < 0.03%, bit rate > 500 Mbps, and GBR > 100 Mbps.

Step S514: After receiving the DT policy negotiation request message of the AF, the NEF authenticates the DT policy negotiation request message.

For example, the NEF stores a mapping relationship #1 between an AF identifier whether the AF is allowed to obtain the DT policy and content of the DT policy that can be obtained by the AF. The NEF authorizes the DT policy negotiation request message only when the NEF determines, based on the AF identifier and the mapping relationship #1, that the AF is allowed to obtain the DT policy and that a parameter requirement carried in the DT policy negotiation request message is within a range allowed to be obtained; otherwise, the NEF rejects the DT policy negotiation request message of the AF.

For example, if the DT policy negotiation request message of the AF carries the information about a variance of latency parameter for the UE group, but the NEF finds, based on the AF identifier and the mapping relationship #1, that the network does not allow the AF to obtain the information about the variance of latency, the NEF rejects the DT policy negotiation request of the AF.

Step S518: After authenticating the DT policy negotiation request message of the AF, the NEF forwards the DT policy negotiation request message of the AF to the PCF.

Specifically, if the NEF stores a mapping relationship #2 between a GPSI and a SUPI of external network UE, after receiving the DT policy negotiation request message of the AF, the NEF converts the GPSI into the SUPI, and then sends the DT policy negotiation request message to a network function network element of a 5GS by using the SUPI. If the NEF does not store the mapping relationship #2 between the GPSI and the SUPI of the external network UE, the NEF first converts the GPSI of the external network UE into a GPSI of internal network UE, and then sends a request to a UDR to obtain an SUPI corresponding to the GPSI of the internal network UE.

Specifically, the NEF may forward the DT policy negotiation request message of the AF to the PCF by using Npcf_DTPolicyControl_Create request signaling.

The information carried in the DT policy negotiation request message forwarded in step S518 is consistent with the information carried in the DT policy negotiation request message in step S510, and details are not described herein again.

For step S522 to step S534, refer to step S422 to step S434. Details are not described herein again.

Step S538: The NWDAF sends a subscription message feedback message to the PCF, where the subscription message feedback message may alternatively be a notification message, and the subscription message feedback message may alternatively be a request message response message.

Specifically, the NWDAF may send the notification message to the PCF by using Nnwdaf_AnalyticsSubscription_Notify signaling.

Specifically, the NWDAF may alternatively send the request message response message to the PCF by using Nnwdaf_AnalyticsInfo_Response signaling.

The notification message or the request message response message may include information about a time window predicted by the NWDAF and information about a predicted value of a third parameter in the time window.

Step S542: The PCF may generate a candidate list of candidate DT policies based on the analytics result sent by the NWDAF and the first indication information, where the candidate list is denoted as a DT policy #3.

Because the analytics results sent by the NWDAF all meet the requirements of the value ranges of the parameters, or the analytics results sent by the NWDAF all meet the parameter requirements of the data transfer configured by the AF, the PCF only needs to combine the DT policies sent by the NWDAF based on whether the DT policy of the first indication information may include a plurality of scattered time windows.

It should be understood that each DT policy obtained after PCF combination may include a plurality of time windows. Each DT policy obtained after the PCF combination may meet a requirement of the time window of the data transfer of the AF, a requirement of the first indication information, and a requirement of the first threshold.

Each DT policy in the DT policy #3 may be in the following form:
- DT policy1
   Time window11, area11, UE ID list 11:charge rate 11,maximum aggregated bit rate 11,QoS parameters 11;
   Time window12, area12, UE ID list 12:charge rate 12,maximum aggregated bit rate 12,QoS parameters 12;
- DT policy 2
   Time window 21, area 21, UE ID list 21:charge rate 21,maximum aggregated bit rate 21,QoS parameters 21;
   Time window 22, area 22, UE ID list 22:charge rate 22,maximum aggregated bit rate 22,QoS parameters 22; ...
- DT policy i
   Time window i1, area i1, UE ID listi1:charge rate i1,maximum aggregated bit rate i1,QoS parameters i1;
   Time window i2, area i2, UE ID listi2:charge rate i2,maximum aggregated bit rate i2,QoS parameters i2;
   Time window i2, area i3, UE ID listi3:charge rate i3,maximum aggregated bit rate i3,QoS parameters i3.

For example, if each DT policy cannot include a plurality of scattered time windows, the PCF may not combine a plurality of policies sent by the NWDAF, but directly selects, from the plurality of policies sent by the NWDAF, a policy that can meet the requirement of the time window of the data transfer of the AF.

Optionally, the PCF may alternatively generate the DT policy #3 based on the information about the first parameter information, the existing DT policy provided by the UDR, the first indication information, the first threshold, and the analytics result sent by the NWDAF.

It should be understood that, if the DT policy negotiation request message does not carry the first threshold, the PCF may locally configure the first threshold, and the PCF generates the DT policy #3 based on the locally configured first threshold.

For example, if a DT policy includes a plurality of scattered time windows, the PCF determines whether a time interval between any two adjacent time windows in the plurality of scattered time windows meets a condition of being less than or equal to the first threshold. If the time interval does not meet the condition, the PCF may not add the DT policy to the DT policy #3.

When determining whether the existing DT policy provided by the UDR can be added to the DT policy #3, information about the parameter requirements, the first indication information, and the first threshold that are carried in the DT policy negotiation request message need to be used to determine whether the existing DT policy provided by the UDR meets the parameter requirements of the AF.

It should be understood that, if the DT policy negotiation request message does not carry the first threshold, the PCF may locally configure the first threshold, and the PCF determines, based on the locally configured first threshold, whether the existing DT policy provided by the UDR meets the parameter requirements.

For step S546 to step S558, refer to step S346 to step S358. Details are not described herein again.

Optionally, if the AF supports the DT policy renegotiation, and the AF finds that the current network condition cannot meet the service requirement in the DT process, the AF may select a new DT policy from the DT policy #3 for data transfer. For a specific renegotiation process, refer to step S362 to step S380. Details are not described herein again.

The AF in the embodiment in FIG. 5 indicates that the DT policy may include a plurality of scattered time windows, so that the PCF can generate, based on an actual situation of a service requirement, a plurality of DT policies that better meet the requirement of the AF, and can assist the AF in accurately and efficiently selecting a more appropriate DT policy.

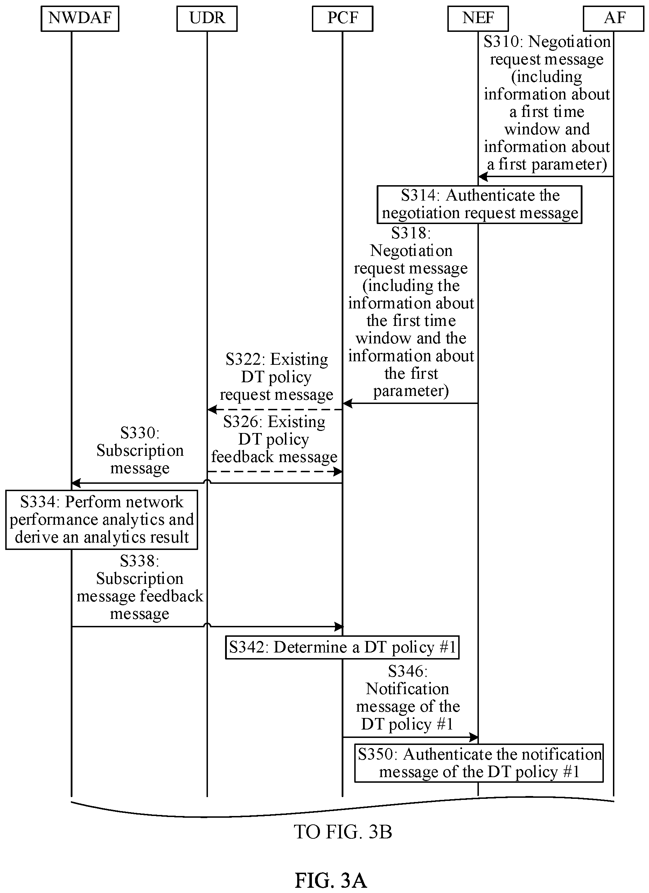

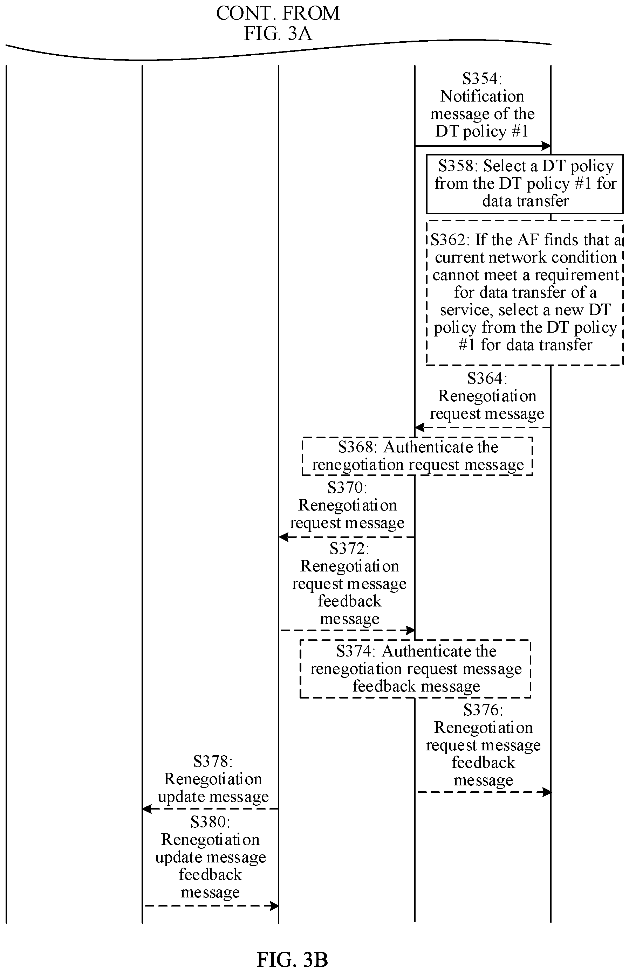

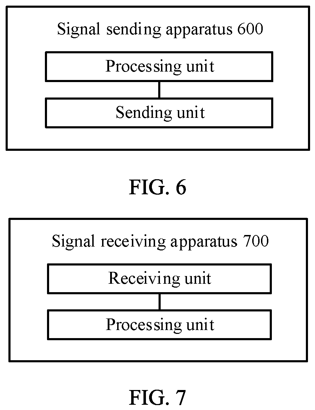

According to the foregoing methods, FIG. 6 is a schematic block diagram of a signal sending communication apparatus 600 according to an embodiment of this application. The communication apparatus 600 may be corresponding to (for example, may be configured on or be configured as) the NWDAF, the UDR, the PCF, the NEF, and the AF described in the methods in FIG. 3A and FIG. 3B, FIG. 4A and FIG. 4B, and FIG. 5, and modules or units in the signal sending communication apparatus 600 are respectively configured to perform the actions or processing processes performed by the NWDAF, the UDR, the PCF, the NEF, and the AF described in the methods in FIG. 3A and FIG. 3B, FIG. 4A and FIG. 4B, and FIG. 5. To avoid repetition, detailed descriptions thereof are omitted herein.

In this embodiment of this application, the apparatus 600 may be the NWDAF, the UDR, the PCF, the NEF, and the AF described in the methods in FIG. 3A and FIG. 3B, FIG. 4A and FIG. 4B, and FIG. 5. In this case, the apparatus 600 may include a processor and a transceiver, and the processor and the transceiver are communicatively connected. Optionally, the apparatus further includes a memory, and the memory and the processor are communicatively connected. Optionally, the processor, the memory, and the transceiver may be communicatively connected. The memory may be configured to store instructions. The processor is configured to execute the instructions stored in the memory, to control the transceiver to send information or a signal.

In this case, a sending unit in the apparatus 600 shown in FIG. 6 may be corresponding to the transceiver, and a processing unit in the apparatus 600 shown in FIG. 6 may be corresponding to the processor.

In this embodiment of this application, the apparatus 600 may be a chip (or a chip system) installed in the NWDAF, the UDR, the PCF, the NEF, and the AF described in the methods in FIG. 3A and FIG. 3B, FIG. 4A and FIG. 4B, and FIG. 5. In this case, the apparatus 600 may include a processor and an input/output interface, and the processor may be communicatively connected to the transceivers of the NWDAF, the UDR, the PCF, the NEF, and the AF described in the methods in FIG. 3A and FIG. 3B, FIG. 4A and FIG. 4B, and FIG. 5 by using the input/output interface. Optionally, the apparatus further includes a memory, and the memory and the processor are communicatively connected. Optionally, the processor, the memory, and the transceiver may be communicatively connected. The memory may be configured to store instructions. The processor is configured to execute the instructions stored in the memory, to control the transceiver to send information or a signal.

In this case, the sending unit in the apparatus 600 shown in FIG. 6 may be corresponding to the input/output interface, and the processing unit in the apparatus 600 shown in FIG. 6 may be corresponding to the processor.

FIG. 7 is a schematic block diagram of a signal receiving apparatus 700 according to an embodiment of this application. The signal receiving apparatus 70 may be corresponding to (for example, may be configured to implement) the NWDAF, the UDR, the PCF, the NEF, and the AF described in the methods in FIG. 3A and FIG. 3B, FIG. 4A and FIG. 4B, and FIG. 5, and modules or units in the signal receiving apparatus 700 are respectively configured to perform actions or processing processes performed by the NWDAF, the UDR, the PCF, the NEF, and the AF described in the methods in FIG. 3A and FIG. 3B, FIG. 4A and FIG. 4B, and FIG. 5. To avoid repetition, detailed descriptions thereof are omitted herein.

In this embodiment of this application, the apparatus 700 may be the NWDAF, the UDR, the PCF, the NEF, and the AF described in the methods in FIG. 3A and FIG. 3B, FIG. 4A and FIG. 4B, and FIG. 5. In this case, the apparatus 700 may include a processor and a transceiver, and the processor and the transceiver are communicatively connected. Optionally, the apparatus further includes a memory, and the memory and the processor are communicatively connected. Optionally, the processor, the memory, and the transceiver may be communicatively connected. The memory may be configured to store instructions. The processor is configured to execute the instructions stored in the memory, to control the transceiver to receive information or a signal.

In this case, a receiving unit in the apparatus 700 shown in FIG. 7 may be corresponding to the transceiver, and a processing unit in the apparatus 700 shown in FIG. 7 may be corresponding to the processor.

In this embodiment of this application, the apparatus 700 may be a chip (or a chip system) installed in the NWDAF, the UDR, the PCF, the NEF, and the AF described in the methods in FIG. 3A and FIG. 3B, FIG. 4A and FIG. 4B, and FIG. 5. In this case, the apparatus 700 may include: a processor and an input/output interface, and the processor may be communicatively connected to a transceiver of a network device by using the input/output interface. Optionally, the apparatus further includes a memory, and the memory and the processor are communicatively connected. Optionally, the processor, the memory, and the transceiver may be communicatively connected. The memory may be configured to store instructions. The processor is configured to execute the instructions stored in the memory, to control the transceiver to receive information or a signal.

In this case, a communication unit in the apparatus 700 shown in FIG. 7 may be corresponding to the input interface, and the processing unit in the apparatus 700 shown in FIG. 7 may be corresponding to the processor.

A person skilled in the art should easily be aware that units and algorithm steps in the examples described with reference to embodiments disclosed in this specification can be implemented by electronic hardware or a combination of computer software and electronic hardware. Whether a function is executed in a manner of hardware or software depends on specific applications and design constraint conditions of the technical solutions. A person skilled in the art may use different methods to implement the described functions for each specific application. However, it should not be considered that the implementation goes beyond the scope of embodiments of this application.

A person skilled in the art may clearly understand that, for a purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiment is merely schematic. For example, the division into the units is merely logical function division. In actual application, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on an actual requirement to achieve an objective of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to current technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a policy control function network element, information about first time windows and information about first parameters, wherein the first time window is a time window that is of data transfer of a first service and that is configured by an application function network element, the first parameter comprises parameters of the data transfer of the first service in the first time window, and the first parameter comprises at least one of a delay, a packet error rate, a packet loss rate, a bit rate, and a guaranteed bit rate; and
sending, by the policy control function network element, information about M policies of the first service, wherein information about each policy comprises information about N time windows, M and N are positive integers, the information about each policy is determined based on the information about the first time window and the information about the first parameter, and the N time windows comprised in one of the M policies of the first service are used to send or receive data of the first service.

2. The method according to claim 1, wherein the method further comprises:
sending, by the policy control function network element, information about N second parameters, wherein the information about the N time windows is in a one-to-one correspondence with the information about the N second parameters, each second parameter comprises parameters of data transfer of the first service in a corresponding time window, and the second parameter comprises at least one of a delay, a packet error rate, a packet loss rate, a bit rate, and a guaranteed bit rate.

3. The method according to claim 1 or 2, wherein the method further comprises:
receiving, by the policy control function network element, first indication information, wherein the first indication information indicates whether the information about each policy is allowed to comprise information about a plurality of time windows.

4. The method according to any one of claims 1 to 3, wherein when information about one policy comprises the information about the plurality of time windows, a time interval between any two adj acent time windows in the plurality of time windows is less than or equal to a first threshold.

5. The method according to any one of claims 1 to 4, wherein the method further comprises:
receiving, by the policy control function network element, a network performance analytics result, wherein the network performance analytics result comprises information about K time windows and information about K fourth parameters, the information about the K time windows is in a one-to-one correspondence with the information about the K fourth parameters, K is a positive integer greater than or equal to N, each fourth parameter comprises parameters of data transfer of the first service in a corresponding time window, and the fourth parameter comprises at least one of a delay, a packet error rate, a packet loss rate, a bit rate, and a guaranteed bit rate.

6. The method according to any one of claims 1 to 5, wherein the method further comprises:
sending, by the policy control function network element, information about a third parameter, wherein the information about the third parameter comprises a value range of the first parameter.

7. The method according to any one of claims 1 to 6, wherein a guaranteed bit rate corresponding to the time window meets at least one of the following:
an average quantity of running access network devices in the time window meets a first threshold, resource utilization of an access network device in the time window meets a second threshold, an average bit rate of data transfer in the time window meets a third threshold, and a maximum bit rate of the data transfer in the time window meets a fourth threshold.

8. The method according to any one of claims 1 to 7, wherein the method further comprises:
determining, by the policy control function network element, the information about the M policies of the first service based on the information about the first time window, the information about the first parameter, and the network performance analytics result.

9. A communication method, wherein the method comprises:
sending, by an application function network element, information about first time windows and information about first parameters, wherein the first time window is a time window that is of data transfer of a first service and that is configured by the application function network element, the first parameter comprises parameters of the data transfer of the first service in the first time window, and the first parameter comprises at least one of a delay, a packet error rate, a packet loss rate, a bit rate, and a guaranteed bit rate;
receiving, by the application function network element, information about M policies of the first service, wherein information about each policy comprises information about N time windows, M and N are positive integers, and the information about each policy is determined based on the information about the first time window and the information about the first parameter; and
sending or receiving, by the application function network element, data of the first service in the N time windows comprised in one of the M policies.

10. The method according to claim 9, wherein the method further comprises:
receiving, by the application function network element, information about N second parameters, wherein the information about the N time windows is in a one-to-one correspondence with the information about the N second parameters, each second parameter comprises parameters of data transfer of the first service in a corresponding time window, and the second parameter comprises at least one of a delay, a packet error rate, a packet loss rate, a bit rate, and a guaranteed bit rate.

11. The method according to claim 9 or 10, wherein the method further comprises:
sending, by the application function network element, first indication information, wherein the first indication information indicates whether the information about each policy is allowed to comprise information about a plurality of time windows.

12. The method according to any one of claims 9 to 11, wherein when information about one policy comprises the information about the plurality of time windows, a time interval between any two adj acent time windows in the plurality of time windows is less than or equal to a first threshold.

13. The method according to any one of claims 9 to 12, wherein a guaranteed bit rate corresponding to the time window meets at least one of the following:
an average quantity of running access network devices in the time window meets a first threshold, resource utilization of an access network device in the time window meets a second threshold, an average bit rate of data transfer in the time window meets a third threshold, and a maximum bit rate of the data transfer in the time window meets a fourth threshold.

14. A communication method, wherein the method comprises:
receiving, by a network data analytics function network element, information about a third parameter, wherein the information about the third parameter comprises a value range of a first parameter, the first parameter comprises parameters of data transfer of a first service in a first time window, the first time window is a time window that is of the data transfer of the first service and that is configured by an application function network element, and the first parameter comprises at least one of a delay, a packet error rate, a packet loss rate, a bit rate, and a guaranteed bit rate;
performing, by the network data analytics function network element, network analytics, and determining a network performance analytics result based on the information about the third parameter; and
sending, by the network data analytics function network element, the network performance analytics result, wherein the network performance analytics result comprises information about K time windows and information about K fourth parameters, the information about the K time windows is in a one-to-one correspondence with the information about the K fourth parameters, each fourth parameter comprises parameters of data transfer of the first service in a corresponding time window, and the fourth parameter comprises at least one of a delay, a packet error rate, a packet loss rate, a bit rate, and a guaranteed bit rate.

15. The method according to claim 14, wherein a guaranteed bit rate corresponding to the time window meets at least one of the following:
an average quantity of running access network devices in the time window meets a first threshold, resource utilization of an access network device in the time window meets a second threshold, an average bit rate of data transfer in the time window meets a third threshold, and a maximum bit rate of the data transfer in the time window meets a fourth threshold.

16. A communication apparatus, wherein the apparatus comprises:
a receiving unit, configured to receive information about first time windows and information about first parameters, wherein the first time window is a time window that is of data transfer of a first service and that is configured by an application function network element, the first parameter comprises parameters of the data transfer of the first service in the first time window, and the first parameter comprises at least one of a delay, a packet error rate, a packet loss rate, a bit rate, and a guaranteed bit rate; and
a sending unit, configured to send information about M policies of the first service, wherein information about each policy comprises information about N time windows, M and N are positive integers, the information about each policy is determined based on the information about the first time window and the information about the first parameter, and the N time windows comprised in one of the M policies of the first service are used to send or receive data of the first service.

17. The apparatus according to claim 16, wherein the sending unit is further configured to send information about N second parameters, wherein the information about the N time windows is in a one-to-one correspondence with the information about the N second parameters, each second parameter comprises parameters of data transfer of the first service in a corresponding time window, and the second parameter comprises at least one of a delay, a packet error rate, a packet loss rate, a bit rate, and a guaranteed bit rate.

18. The apparatus according to claim 16 or 17, wherein the receiving unit is further configured to receive first indication information, wherein the first indication information indicates whether the information about each policy is allowed to comprise information about a plurality of time windows.

19. The apparatus according to any one of claims 16 to 18, wherein when information about one policy comprises the information about the plurality of time windows, a time interval between any two adjacent time windows in the plurality of time windows is less than or equal to a first threshold.

20. The apparatus according to any one of claims 16 to 19, wherein the receiving unit is further configured to receive a network performance analytics result, wherein the network performance analytics result comprises information about K time windows and information about K fourth parameters, the information about the K time windows is in a one-to-one correspondence with the information about the K fourth parameters, K is a positive integer greater than or equal to N, each fourth parameter comprises parameters of data transfer of the first service in a corresponding time window, and the fourth parameter comprises at least one of a delay, a packet error rate, a packet loss rate, a bit rate, and a guaranteed bit rate.

21. The apparatus according to any one of claims 16 to 20, wherein the sending unit is further configured to send information about a third parameter, wherein the information about the third parameter comprises a value range of the first parameter.

22. The apparatus according to any one of claims 16 to 21, wherein a guaranteed bit rate corresponding to the time window meets at least one of the following:
an average quantity of running access network devices in the time window meets a first threshold, resource utilization of an access network device in the time window meets a second threshold, an average bit rate of data transfer in the time window meets a third threshold, and a maximum bit rate of the data transfer in the time window meets a fourth threshold.

23. The apparatus according to any one of claims 16 to 22, wherein the apparatus further comprises:
a processing unit, configured to determine the information about the M policies of the first service based on the information about the first time window, the information about the first parameter, and the network performance analytics result.

24. A communication apparatus, wherein the apparatus comprises:
a sending unit, configured to send information about first time windows and information about first parameters, wherein the first time window is a time window that is of data transfer of a first service and that is configured by an application function network element, the first parameter comprises parameters of the data transfer of the first service in the first time window, and the first parameter comprises at least one of a delay, a packet error rate, a packet loss rate, a bit rate, and a guaranteed bit rate; and
a receiving unit, configured to receive information about M policies of the first service, wherein information about each policy comprises information about N time windows, M and N are positive integers, and the information about each policy is determined based on the information about the first time window and the information about the first parameter, wherein
the sending unit is further configured to send data of the first service in at least one time window comprised in one of the M policies, and the receiving unit is further configured to receive the data of the first service in the at least one time window comprised in one of the M policies.

25. The apparatus according to claim 24, wherein the receiving unit is further configured to receive information about N second parameters, wherein the information about the N time windows is in a one-to-one correspondence with the information about the N second parameters, each second parameter comprises parameters of data transfer of the first service in a corresponding time window, and the second parameter comprises at least one of a delay, a packet error rate, a packet loss rate, a bit rate, and a guaranteed bit rate.

26. The apparatus according to claim 24 or 25, wherein the sending unit is further configured to send first indication information, wherein the first indication information indicates whether the information about each policy is allowed to comprise information about a plurality of time windows.

27. The apparatus according to any one of claims 24 to 26, wherein when information about one policy comprises the information about the plurality of time windows, a time interval between any two adjacent time windows in the plurality of time windows is less than or equal to a first threshold.

28. The apparatus according to any one of claims 24 to 27, wherein a guaranteed bit rate corresponding to the time window meets at least one of the following:
an average quantity of running access network devices in the time window meets a first threshold, resource utilization of an access network device in the time window meets a second threshold, an average bit rate of data transfer in the time window meets a third threshold, and a maximum bit rate of the data transfer in the time window meets a fourth threshold.

29. A communication apparatus, wherein the apparatus comprises:
a receiving unit, configured to receive information about a third parameter, wherein the information about the third parameter comprises a value range of a first parameter, the first parameter comprises parameters of data transfer of a first service in a first time window, the first time window is a time window that is of the data transfer of the first service and that is configured by an application function network element, and the first parameter comprises at least one of a delay, a packet error rate, a packet loss rate, a bit rate, and a guaranteed bit rate;
a processing unit, configured to: perform network analytics, and determine a network performance analytics result based on the information about the third parameter; and
a sending unit, configured to send the network performance analytics result, wherein the network performance analytics result comprises information about K time windows and information about K fourth parameters, the information about the K time windows is in a one-to-one correspondence with the information about the K fourth parameters, each fourth parameter comprises parameters of the data transfer of the first service in a corresponding time window, and the fourth parameter comprises at least one of a delay, a packet error rate, a packet loss rate, a bit rate, and a guaranteed bit rate.

30. The apparatus according to claim 29, wherein a guaranteed bit rate corresponding to the time window meets at least one of the following:
an average quantity of running access network devices in the time window meets a first threshold, resource utilization of an access network device in the time window meets a second threshold, an average bit rate of data transfer in the time window meets a third threshold, and a maximum bit rate of the data transfer in the time window meets a fourth threshold.

31. A communication method, wherein the method comprises:
sending, by an application function network element, information about first time windows and information about first parameters to a policy control function network element, wherein the first time window is a time window that is of data transfer of a first service and that is configured by the application function network element, the first parameter comprises parameters of data transfer of the first service in the first time window, and the first parameter comprises at least one of a delay, a packet error rate, a packet loss rate, a bit rate, and a guaranteed bit rate;
receiving, by the policy control function network element, the information about the first time window and the information about the first parameter;
sending, by the policy control function network element, information about M policies of the first service to the application function network element, wherein information about each policy comprises information about N time windows, M and N are positive integers, the information about each policy is determined based on the information about the first time window and the information about the first parameter, and the N time windows comprised in one of the M policies of the first service are used to send or receive data of the first service; and
receiving, by the application function network element, the information about the M policies of the first service.

32. The method according to claim 31, wherein the method further comprises:
sending, by the policy control function network element, information about N second parameters to the application function network element, wherein the information about the N time windows is in a one-to-one correspondence with the information about the N second parameters, each second parameter comprises parameters of data transfer of the first service in a corresponding time window, and the second parameter comprises at least one of a delay, a packet error rate, a packet loss rate, a bit rate, and a guaranteed bit rate; and
receiving, by the application function network element, the information about the N second parameters.

33. The method according to claim 31 or 32, wherein the method further comprises:
sending, by the application function network element, first indication information, wherein the first indication information indicates whether the information about each policy is allowed to comprise information about a plurality of time windows; and
receiving, by the policy control function network element, the first indication information.

34. The method according to any one of claims 31 to 33, wherein when information about one policy comprises the information about the plurality of time windows, a time interval between any two adjacent time windows in the plurality of time windows is less than or equal to a first threshold.

35. The method according to any one of claims 31 to 34, wherein the method further comprises:
receiving, by the policy control function network element, a network performance analytics result from a network data analytics function network element, wherein the network performance analytics result comprises information about K time windows and information about K fourth parameters, the information about the K time windows is in a one-to-one correspondence with the information about the K fourth parameters, K is a positive integer greater than or equal to N, each fourth parameter comprises parameters of data transfer of the first service in a corresponding time window, and the fourth parameter comprises at least one of a delay, a packet error rate, a packet loss rate, a bit rate, and a guaranteed bit rate.

36. The method according to any one of claims 31 to 35, wherein the method further comprises:
sending, by the policy control function network element, information about a third parameter to the network data analytics function network element, wherein the information about the third parameter comprises a value range of the first parameter.

37. The method according to any one of claims 31 to 36, wherein a guaranteed bit rate corresponding to the time window meets at least one of the following:
an average quantity of running access network devices in the time window meets a first threshold, resource utilization of an access network device in the time window meets a second threshold, an average bit rate of data transfer in the time window meets a third threshold, and a maximum bit rate of the data transfer in the time window meets a fourth threshold.

38. The method according to any one of claims 31 to 37, wherein the method further comprises:
determining, by the policy control function network element, the information about the M policies of the first service based on the information about the first time window, the information about the first parameter, and the network performance analytics result.

39. A communication system, comprising a policy control function network element, an application function network element, and a network data analytics function network element, wherein the policy control function network element is configured to perform the communication method according to any one of claims 1 to 8, the application function network element is configured to perform the communication method according to any one of claims 9 to 13, and the network data analytics function network element is configured to perform the communication method according to either of claims 14 and 15.

40. A communication apparatus, comprising:
a processor, wherein the processor is coupled to a memory, the memory is configured to store a program or instructions, and when the program or the instructions are executed by the processor, the apparatus is enabled to perform the communication method according to any one of claims 1 to 15.

41. A computer-readable storage medium, wherein the computer-readable storage medium stores a computer program, and when the computer program runs on a computer, the computer is enabled to perform the communication method according to any one of claims 1 to 15.

42. A computer program product, comprising computer program code, wherein when the computer program code is run, the communication method according to any one of claims 1 to 15 is implemented.
